(19)

Europäisches Patentamt
European Patent Office
Office européen des brevets

(11) **EP 4 366 145 A1**

(12) **EUROPEAN PATENT APPLICATION**
published in accordance with Art. 153(4) EPC

(43) Date of publication:
08.05.2024 Bulletin 2024/19

(21) Application number: 22832002.4

(22) Date of filing: 28.06.2022

(51) International Patent Classification (IPC):
*H02K 33/02* (2006.01)    *A61C 17/26* (2006.01)
*G01L 1/26* (2006.01)

(52) Cooperative Patent Classification (CPC):
A61C 17/26; G01L 1/26; H02K 33/02

(86) International application number:
PCT/CN2022/101744

(87) International publication number:
WO 2023/274188 (05.01.2023 Gazette 2023/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.06.2021 CN 202110719558

(71) Applicant: Shanghai Shift Electrics Co., Ltd.
Shanghai 201506 (CN)

(72) Inventors:
• DAI, Xiaoguo
Shanghai 201506 (CN)
• XU, Zhenwu
Shanghai 201506 (CN)

(74) Representative: WSL Patentanwälte Partnerschaft mbB
Kaiser-Friedrich-Ring 98
65185 Wiesbaden (DE)

(54) **CLEANING AND NURSING APPLIANCE, AND TRANSDUCER DEVICE AND PRESSURE ALARM MECHANISM THEREFOR**

(57) The present invention provides a clean-and-care appliance, and a transducer device and a pressure alarm mechanism therefor. The transducer device according to the present invention comprises a transducer, wherein an elastic assembly comprises at least one proximal elastic member and at least one distal elastic member; the proximal elastic member and the distal elastic member are respectively provided with a first edge and a second edge; the first edge is fixedly connected to a driving shaft so as to move along with the driving shaft, and the second edge forms a fixed edge when the proximal elastic member and the distal elastic member are elastically deformed; the plane of the proximal elastic member forms a first angle with respect to a median plane of a rack, and the plane of the distal elastic member forms a second angle with respect to the median plane. By using the transducer device according to the present invention, the elastic members can be protected from failure, the size of the transducer device can be decreased, and the achievement of the pressure alarm mechanism by means of the elastic assembly can be facilitated.

Fig. 4

EP 4 366 145 A1

## Description

### Technical Field

The present invention relates to the technical field of clean-and-care appliances, and more specifically, to a transducer device and a pressure alarm mechanism in a clean-and-care appliance.

### Background Art

It is important for a personal clean-and-care appliance, such as an electric toothbrush, an electric shaver, an electric facial cleaner and an electric shower, to have a transducer device that can convert a reciprocating motion into a desired rotational motion of a cleaning element. Such personal clean-and-care appliances need to have a simple structure, easy assembly, long service life, safety and reliability, and small size.

It is known that there are many driving structures, such as motors, magnetic systems and electromagnetic systems, for driving the cleaning element. Some of the driving structures use bearings such as a ball bearing to support a driver. Such a structure is expensive and complex, and also has noise and motor damping.

The applicant has another Chinese invention patent with the Publication No. CN 104617732 B, which discloses a personal clean-and-care appliance. A transducer of the personal clean-and-care appliance includes a driving shaft, transducer elastic member fixing members fastened to left and right supports of a driver, at least two permanent magnets, corresponding permanent magnet supports fixedly coupled to the permanent magnets, left and right transducer transmission arms that are fixedly coupled to the permanent magnet supports and the driving shaft, and at least a left transducer elastic member and a right transducer elastic member that are disposed on left and right sides of a longitudinal axis of the driving shaft, where the left and right permanent magnets are separate from each other, the permanent magnet on one side has a magnetic polarity of either S pole or N pole in the direction of a driving coil, the permanent magnet on the other side has a magnetic polarity, opposite to the magnetic polarity of the permanent magnet on the one side, in the direction of the driving coil, the left and right permanent magnets are disposed such that angles between directions of their internal magnetic lines and a direction of a longitudinal axis of the driving coil are each greater than 45° and less than 135°, and the left and right permanent magnets can move relative to the elastic member fixing members and when an alternating current I with a frequency of $f_0$ passes through the driving coil, movement directions of the left and right permanent magnets are approximately parallel to a direction of a longitudinal axis of an iron core of the driving coil.

In the above solution, the driving shaft does not need to be equipped with a ball bearing. However, due to a limited capability of the elastic members to balance pressure on the cleaning element, long-time use of the elastic members is likely to cause fatigue and therefore yielding of the elastic members, consequently affecting the service life of the transducer. Moreover, since the elastic members are respectively fixedly coupled to corresponding transducer transmission arms and transducer elastic member fixing members, the overall size of the transducer is large, which is not conducive to miniaturization of the cleaning appliance. Therefore, the existing personal clean-and-care appliance still needs to be improved.

### Summary of the Invention

To overcome the deficiencies in the prior art, the present invention provides a transducer device for a personal clean-and-care appliance, the transducer device including: a transducer and driving coils, where the transducer includes a transducer frame, magnets attached to the transducer frame, an elastic assembly attached to the transducer frame, and a driving shaft, where the driving shaft has a proximal end and a distal end, the driving shaft is fixedly attached to the transducer frame, and the driving shaft defines a longitudinal axis which extends through a median plane, and the median plane is substantially perpendicular to a cleaning action force on the clean-and-care appliance; and the driving coils are arranged opposite to the magnets of the transducer, and the transducer is movable relative to the driving coils, where the elastic assembly includes at least one proximal elastic member and at least one distal elastic member which are arranged offset along the longitudinal axis, and the proximal elastic member is closer to the proximal end of the driving shaft than the distal elastic member, where the proximal elastic member and the distal elastic member each have a first edge and a second edge, the first edges are fixedly coupled to the driving shaft to move with the driving shaft, the second edges form fixed edges when the proximal elastic member and the distal elastic member are elastically deformed, and respective planes of the proximal elastic member and the distal elastic member substantially extend radially outward from the longitudinal axis.

According to a preferred aspect of the present invention, a distance between center lines of the respective widths of the proximal elastic member and the distal elastic member along the longitudinal axis is at least 3.5 mm.

According to a preferred aspect of the present invention, the plane of the proximal elastic member forms a first angle relative to the median plane, and the plane of the distal elastic member forms a second angle relative to the median plane, where the first angle and the second angle are greater than or equal to 10 degrees and less than or equal to 90 degrees.

According to a preferred aspect of the present invention, the proximal elastic member and the distal elastic member are located on two opposite sides of the median plane or on the same side of the median plane, and the proximal elastic member and the distal elastic member are located on two opposite sides or the same side of a perpendicular plane that is perpendicular to the median plane P and includes the longitudinal axis. Alternatively, the proximal elastic member and the distal elastic member are disposed along a direction of the perpendicular plane.

According to another preferred aspect of the present invention, the proximal elastic member is made of plastic or metal, and the distal elastic member is made of plastic.

According to another preferred aspect of the present invention, proximal elastic members are arranged in a pair symmetrically about the longitudinal axis, and distal elastic members are arranged in a pair symmetrically about the longitudinal axis.

According to another preferred aspect of the present invention, the elastic assembly further includes at least another elastic member made of metal, the elastic member is arranged offset relative to the proximal elastic member and the distal elastic member along the longitudinal axis, and an angle between a plane of the metal elastic member and the median plane is less than the angles between the median plane and the planes of the proximal elastic member and the distal elastic member. A total elastic modulus of the another metal elastic member is twenty or more times greater than a total elastic modulus of the distal elastic member.

According to another preferred aspect of the present invention, the transducer frame includes a transducer frame portion enclosing the driving shaft and frame fastening arms that are paired and spaced radially from the driving shaft, where the frame fastening arms each have an upper protrusion and a lower protrusion, the upper protrusion and the lower protrusion are arranged offset from each other on the frame fastening arm, the first edges are fixed to the transducer frame portion, and the second edges are respectively fixed to the upper protrusion and the lower protrusion of the frame fastening arm.

The present invention further provides a pressure alarm mechanism for a clean-and-care appliance, the pressure alarm mechanism including: a driving shaft defining a longitudinal axis and having a proximal end and a distal end, a driving portion being attached to the driving shaft from the distal end of the driving shaft, and the proximal end generating a first displacement in a first direction when a cleaning action force F1 of the clean-and-care appliance is in the first direction; a proximal elastic member, a first edge of the proximal elastic member being fixedly coupled to the driving shaft to move with the driving shaft, and a supporting point for the driving shaft being formed at the position of the proximal elastic member; a distal elastic member, disposed offset toward the distal end along the longitudinal axis relative to the proximal elastic member, a first edge of the distal elastic member being fixedly coupled to the driving shaft to move with the driving shaft, and the driving shaft at the position of the first edge of the lower elastic member generating a second displacement in a second direction opposite to the first direction when the cleaning action force F1 is applied to the proximal end; and a sensing device, including a fixed component and a movable component, where the movable device is disposed on the driving portion, and when the cleaning action force F1 is applied to the proximal end, the movable component generates a third displacement in the second direction relative to the fixed component, and when the cleaning action force F1 exceeds a maximum force $F1_M$, the displacement of the movable component relative to the fixed component causes an alarm device of the pressure alarm mechanism to generate an alarm indication.

According to another preferred aspect of the present invention, the proximal elastic member and the distal elastic member each have a second edge opposite to the first edge, and the second edges form fixed edges when the proximal elastic member and the distal elastic member are elastically deformed, where a distance between center lines of the respective widths of the proximal elastic member and the distal elastic member along the longitudinal axis is at least 3.5 mm. A plane of the proximal elastic member forms a first angle relative to the median plane (P), and a plane of the distal elastic member forms a second angle relative to the median plane, where the first angle and the second angle are greater than or equal to 10 degrees and less than or equal to 90 degrees.

According to another preferred aspect of the present invention, the longitudinal axis extends through a median plane, the median plane is substantially perpendicular to the cleaning action force, a plane of the proximal elastic member forms a first angle relative to the median plane P, and a plane of the distal elastic member forms a second angle relative to the median plane, where the first angle and the second angle are greater than or equal to 10 degrees and less than or equal to 90 degrees, where the proximal elastic member and the distal elastic member are located on two opposite sides of the median plane or on the same side of the median plane, and the proximal elastic member and the distal elastic member are located on two opposite sides of a plane where a direction of the cleaning action force and the longitudinal axis are located or along the direction of the cleaning action force.

According to another preferred aspect of the present invention, the driving portion includes magnets and a frame, the magnets are attached to the distal end of the driving shaft via the frame, and the movable component is farther away from the proximal elastic member than the proximal end of the driving shaft.

According to another preferred aspect of the present invention, the fixed component of the sensing device includes a sensing apparatus and an emission source, a gap is formed between the sensing apparatus and the emission source, and the movable component includes a stop that can move into the gap between the sensing apparatus and the emission source, where the sensing apparatus and the emission source include at least one of an electrical, magnetic, and optical sensing apparatus and an emission source.

According to another preferred aspect of the present invention, the sensing apparatus and the emission source are disposed on a circuit board or a housing of the clean-and-care appliance or on a part fixed relative to the housing. The part fixed relative to the housing includes a circuit board, a battery compartment frame, and the like.

According to another preferred aspect of the present invention, the pressure alarm mechanism includes a force limiting portion, which limits a movement range of the movable component, such that the maximum force $F1_M$ of the sensing apparatus ranges from 2.5 N to 15 N, where a maximum force limiting portion is disposed on the housing of the clean-and-care appliance or the part fixed relative to the housing.

In addition, the present invention further provides a clean-and-care appliance, which includes the transducer device as described above or the pressure alarm mechanism as described above. The clean-and-care appliance includes one of an electric toothbrush, an electric shaver, an electric facial cleaner, and an electric shower.

Furthermore, according to the present invention, the driving coils are arranged to have no relative movement relative to the housing of the clean-and-care appliance, the driving coils are arranged in a magnetic field generated by the magnets, an angle between the magnetic lines generated by the magnets and the directions of currents I in the driving coils is approximately 90 degrees, the alternating currents I with a frequency of $f_0$ passes through the driving coils, so that the driving coils interact with the magnets to generate a reciprocating force couple with the longitudinal axis of the driving shaft as an axis, and the reciprocating force couple drives the transducer to perform harmonic vibration.

In addition, in the clean-and-care appliance according to the present invention, the transducer and a cleaning assembly of the clean-and-care appliance form a harmonic vibration body, the driving coils and the magnets interact to generate a reciprocating force couple with the longitudinal axis L2 of the driving shaft as an axis, the reciprocating force couple drives the harmonic vibration body to perform harmonic vibration, and a natural frequency fn of the harmonic vibration body is between 85% and 115% of the frequency f0 of the reciprocating force couple.

The use of the transducer device according to the present invention solves the problem of the elastic members being prone to fatigue and thus yield, improves the service life of the transducer device, realizes miniaturization of personal clean-and-care appliances, and also achieves easy assembly, smooth rotation, low noise, low damping, safety and reliability. In addition, it is beneficial for the pressure alarm mechanism to be able to identify an amount of force applied on the cleaning element.

## Brief Description of the Drawings

For a more complete understanding of the present invention, the following description of exemplary embodiments may be considered with reference to the accompanying drawings.

FIG. 1 is a perspective view of a personal clean-and-care appliance and an internal mechanism according to a first preferred embodiment of the present invention;

FIG. 2 is an exploded view of the internal mechanism including a transducer device of the clean-and-care appliance shown in FIG. 1;

FIG. 3 is a perspective view of the transducer device according to the first preferred embodiment of the present invention;

FIG. 4 is a perspective view of the transducer device according to the first preferred embodiment of the present invention, showing an elastic assembly in the transducer device;

FIG. 5 shows two first elastic members and a driving shaft applicable to the first embodiment of the present invention;

FIG. 6 shows two first elastic members applicable to a transducer according to the first embodiment of the present invention;

FIG. 7 is a schematic end view showing positional relationships between a cleaning element and first elastic members and second elastic members;

FIG. 8 shows a force diagram of elastic members and a cleaning assembly along a longitudinal axis according to a preferred embodiment of the present invention;

FIG. 9 is a bottom perspective view of the transducer device and a circuit board according to the first embodiment of the present invention;

FIG. 10 shows a perspective view of a transducer device according to a second preferred embodiment of the present invention;

FIG. 11 is another perspective view of the transducer device in FIG. 10, showing driving coils;

FIG. 12 is a perspective view of a transducer device according to a third embodiment of the present invention;

FIG. 13 is another perspective view of the transducer device shown in FIG. 12, with driving coils being removed;

FIG. 14 is a perspective view of a transducer device according to a fourth embodiment of the present invention;

FIG. 15 is a schematic diagram of a combination of a driving shaft, elastic members, and magnets in the transducer device shown in FIG. 14 according to the fourth embodiment of the present invention;
FIG. 16 is a schematic diagram of the elastic members in the transducer device shown in FIG. 15 according to the fourth preferred embodiment of the present invention; and
FIG. 17 is a diagram of a relationship between a support, the elastic members, and a cleaning element of the transducer device according to the fourth preferred embodiment of the present invention.

List of reference signs

1: handle
2: cleaning element carrier
3: cleaning element
4: circuit board
5: battery
7, 7': transducer
101: driving shaft
102: first magnet
103: second magnet
104: first elastic member
104A: first elastic member
104B: first elastic member
105: second elastic member
105A: proximal second elastic member
105B: distal second elastic member
106: edge of the first elastic member
107: edge of the first elastic member
108: edge of the second elastic member
109: edge of the second elastic member
110: transducer frame
111: frame protrusion
112: transducer frame portion enclosing the driving shaft
113: frame fastening arm
114: frame follower
115: supporting arm
121: first driving coil
122: second driving coil
131: upper transducer housing
132: lower transducer housing
133: fastening screw
134: driving coil frame
135: battery compartment
202: magnet
203: magnet
221: driving coil
204A, 204B: first elastic member
302: cylindrical magnet
321, 322, 323, 324: driving coil
401: photosensitive element
402: light source
501: driving shaft
502: first magnet
503: second magnet

505A: proximal elastic member
505B: distal elastic member
508: edge of an elastic member
509: edge of an elastic member
510: transducer frame
511: frame protrusion
512: transducer frame portion enclosing the driving shaft
513: frame fastening arm
L1: longitudinal axis of the cleaning element
L2: longitudinal axis of the driving shaft
L3: center line of the proximal second elastic member
L4: center line of the distal second elastic member
L5: center line of the proximal elastic member
L6: center line of the distal elastic member
$\alpha 1, \alpha 2, \alpha 3, \alpha 4$: angle between a second elastic member plane and the longitudinal axis of the cleaning element
$\beta 1, \beta 2, \beta 3, \beta 4$: angle between a first elastic member plane and the longitudinal axis of the cleaning element
$\delta 1, \delta 2, \delta 3, \delta 4$: angle between an elastic member plane and the longitudinal axis of the cleaning element

**Detailed Description of Embodiments**

The present invention will be further described below in conjunction with particular embodiments and the accompanying drawings, and more details are explained in the following description for the ease of fully understanding the present invention; however, the present invention can obviously be implemented in various different manners than that described herein, a person skilled in the art can make an similar extension and deduction without departing from the connotation of the present invention according to the practical applications, and therefore the scope of protection of the present invention should not be limited to the content of the particular embodiments herein.

Exemplary embodiments of the present invention will be described in more detail below with reference to the accompanying drawings using a typical example in which an electric toothbrush is used as a personal clean-and-care appliance. Although the electric toothbrush is merely used as an example for explanation below, the present invention is not limited thereto. The present invention is also applicable to an electric shaver, an electric facial cleaner, an electric shower and other clean-and-care appliances that can provide cleaning actions by means of a transducer.

For the sake of clarity, words describing spatial relative positions such as "upper", "lower", "left", "right", "proximal end" and "distal end" are used in this specification to briefly describe a relationship between one element or feature shown in the figures and another element(s) or feature(s), where a direction of a longitudinal axis of a driving coil refers to a direction of a magnetic line generated inside an iron core when a current I flows through the driving coil in a direction parallel to it. "Upper" and "lower" are discussed with respect to the longitudinal axis of the driving shaft, when facing a corresponding view, an upward direction parallel to the longitudinal axis of the driving shaft is defined as "upper", and a downward direction parallel to the longitudinal axis of the driving shaft is defined as "lower". "Left" and "right" are discussed with respect to the longitudinal axis of the driving shaft, when facing a corresponding view, in a direction perpendicular to the longitudinal axis of the driving shaft, a left side of the longitudinal axis of the driving shaft is defined as "left", and a right side of the longitudinal axis is defined as "right". "Proximal/proximal side" refers to an end or side close to a position where a cleaning action force is applied during use of the clean-and-care appliance. "Distal/distal side" refers to an end or side away from a position where the cleaning action force is applied during use of the clean-and-care appliance.

In addition, the word "and/or" used in the present application includes any and all combinations of one or more words of the listed associated words.

Although the word "first" and the like are used in this specification to describe a plurality of elements or components, these elements or components should not be limited by these words. These words are merely used to distinguish one element or component from another element or component and do not include a "sequence". Therefore, interchange of ordinal numbers of the elements or components discussed below does not exceed the concept and scope of the present invention.

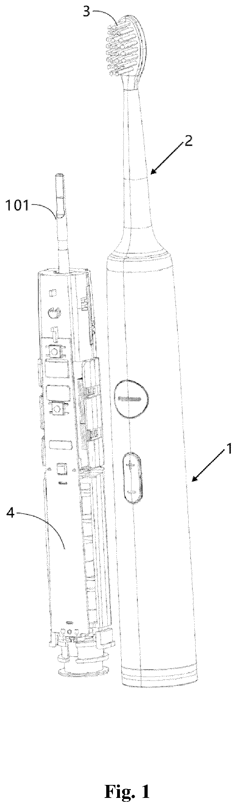

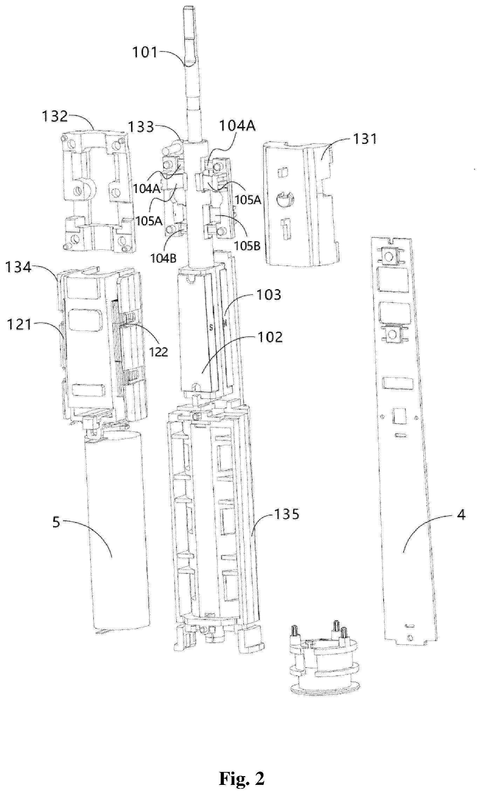

FIG. 1 and FIG. 2 are respectively a perspective view and an exploded perspective view of a clean-and-care appliance according to a first preferred embodiment of the present invention. In the following description of the clean-and-care appliance, an electric toothbrush is taken as an example. The electric toothbrush mainly includes a handle 1 and a cleaning assembly detachably mounted on the handle 1. The handle 1 includes a handle housing and various functional components mounted in the handle housing. The cleaning assembly of the electric toothbrush is in the form of a toothbrush head, which includes a cleaning element carrier 2 and a cleaning element 3 distributed on the cleaning element carrier 2. The carrier 2 of the toothbrush head is mounted on the handle 1 by means of, for example, a snap coupling. The snap coupling can allow the driving handle 1 and the cleaning assembly to be reliably coupled together, and can also allow the driving handle 1 to be conveniently separated from the cleaning assembly. The cleaning element 3 may be an object such as brushing bristles.

The functional components in the handle 1 of the clean-and-care appliance mainly include a power supply portion, a control portion, a trigger portion, and a transducer device. Generally, the power supply portion includes a rechargeable battery 5 mounted in a battery compartment 135 and a charging circuit, to provide power to various portions of the appliance. The control component mainly includes a circuit board 4 for controlling various working modes of the electric toothbrush and on or off of the electric toothbrush. The trigger portion includes a switch for starting and stopping the operation of the electric toothbrush. The transducer device is configured to convert input electrical energy into mechanical energy that provides reciprocating motion of the cleaning assembly.

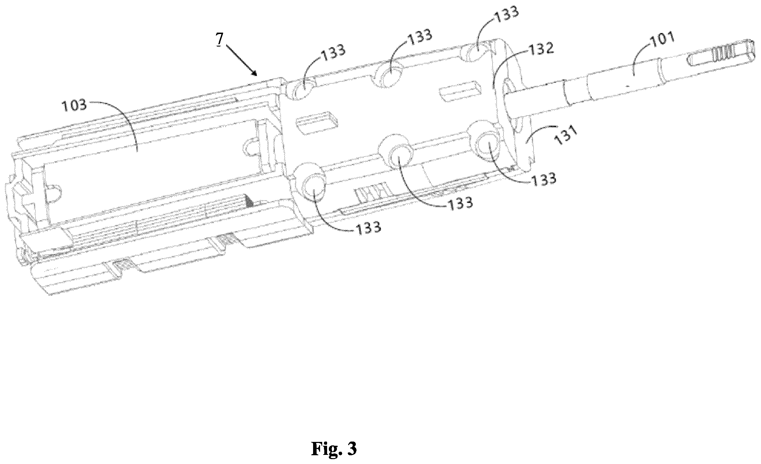

FIG. 2, FIG. 3, and FIG. 4 show a transducer device according to a first embodiment of the present invention. The transducer device mainly includes a transducer 7, and driving coils of the transducer device are arranged opposite to the transducer 7. The transducer 7 mainly includes a transducer frame 110, a first magnet 102, a second magnet 103, a driving shaft 101 detachably assembled with the cleaning assembly, and an elastic assembly for causing a harmonic motion.

Preferably, the transducer frame 110 is made of plastic. In the first embodiment, the first magnet 102 and the second magnet 103 as part of the transducer 7 are fixedly coupled, by means of glue, screws or injection molding, to a distal end of the transducer frame 110 away from the cleaning element 3, so that the magnets 102, 103 become an integral part of the transducer 7.

Preferably, the transducer device further includes an upper transducer housing 131 and a lower transducer housing 132, which are fastened together via, for example, fastening screws 133, so as to press frame fastening arms 113 of the transducer frame 110 between the two housings and locking the transducer frame 110 accordingly. The upper transducer housing 131 and the lower transducer housing 132 are further fastened to a housing of the appliance. However, it should be understood that in other alternative embodiments, the upper and lower transducer housings may also be an integral part of the handle housing.

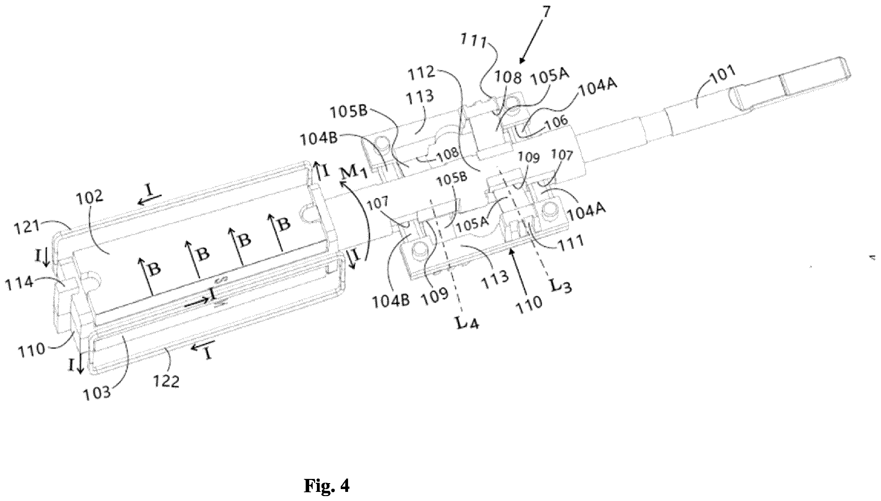

In a first preferred embodiment, as shown in FIG. 4, the elastic assembly of the transducer 7 includes four first elastic members 104 and four second elastic members 105. More specifically, as shown in FIG. 4, along the driving shaft 101, the elastic assembly includes, in sequence from the proximal end to the distal end, two first elastic members 104A, two second elastic members (proximal elastic members) 105A, two second elastic members (distal elastic members) 105B, and two first elastic members 104B.

Each of the first elastic members 104A and 104B is substantially a cuboid. A distance of each of the first elastic members 104A and 104B from the frame fastening arm 113 to the transducer frame portion 112 is the length of the elastic member, a distance of each of the first elastic members 104A and 104B along a direction of the longitudinal axis L2 of the driving shaft is called the width of the elastic member, the length of the remaining dimension of the cuboid is the thickness of the elastic member, and a plane formed by the length and the width of each of the first elastic members 104A and 104B is an elastic member plane. Similarly, each of the second elastic members 105 is substantially a cuboid, a distance of each of the second elastic members 105A and 105B from a frame protrusion 111 of the frame fastening arm 113 to the transducer frame portion 112 is the length of the elastic member, a distance of each of the second elastic members 105A and 105B along the direction of the longitudinal axis of the driving shaft is the width of the elastic member, and the length of the remaining dimension of the cuboid is the thickness of the elastic member. A plane formed by the length and the width of each of the second elastic members 105A and 105B is an elastic member plane.

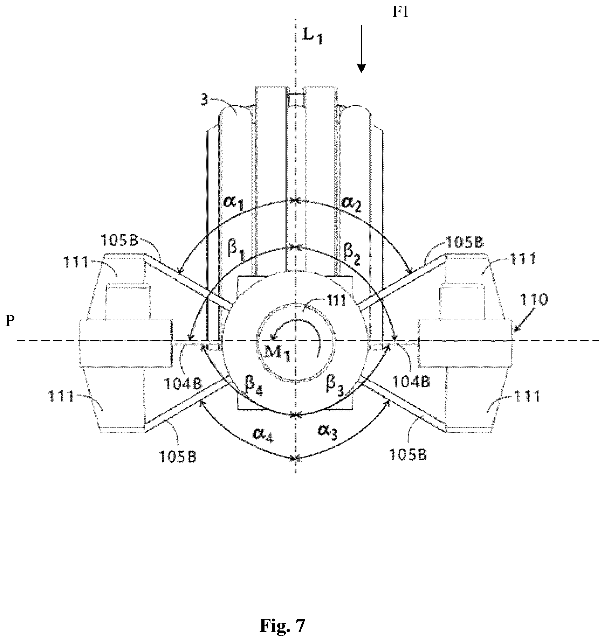

As shown in FIG. 7, the four first elastic members 104A and 104B are located in the same plane, and they are in a median plane P of the transducer device. For the transducer device according to the present invention, the median plane P is defined as a plane which is perpendicular to a direction of a cleaning action force F1 and on which the longitudinal axis L2 of the driving shaft is located, and the cleaning action force F1 is perpendicular to the longitudinal axis L2 of the driving shaft. In the electric toothbrush, the direction of the cleaning action force F1 is defined as a direction in which a longitudinal axis L1 of the cleaning element 3 is located, that is, the median plane P is substantially perpendicular to the longitudinal axis L1 of the cleaning element 3. Since the first elastic members 104 are located in the median plane P, an angle between the plane of the first elastic members 104 and the longitudinal axis L2 of the driving shaft is 0 degrees. More specifically, in the first embodiment, angles between the longitudinal axis L1 of the cleaning element and the elastic member planes of the first elastic members 104A and 104B are $\beta 1$, $\beta 2$, $\beta 3$, and $\beta 4$, respectively. As shown in FIG. 7, in this embodiment, $\beta 1$, $\beta 2$, $\beta 3$, and $\beta 4$ are all equal to 90 degrees, and the longitudinal axis L1 of the cleaning element is perpendicular to the first elastic member planes. However, in other alternative embodiments, the angles $\beta 1$, $\beta 2$, $\beta 3$, and $\beta 4$ may alternatively be set to other different values.

Further, the second elastic members 105 of the elastic assembly include proximal elastic members 105A and distal elastic members 105B arranged in pairs, and the two pairs of elastic members are arranged offset along the longitudinal axis L2. The proximal elastic members 105A are closer to the proximal end of the driving shaft 101, while the distal elastic members 105B are closer to the distal end of the driving shaft 101. The plane of each second elastic member 105 is a plane that connects the respective frame protrusion 111 and the transducer frame portion 112 enclosing the driving shaft, and preferably, an angle between the plane and the median plane where the longitudinal axis L2 is located is greater than 30 degrees, and preferably, an angle between the plane and the longitudinal axis L2 is less than 30 degrees.

Different from the arrangement of the first elastic members 104A and 104B in the median plane P, the four second elastic members 105 are arranged at an angle relative to the median plane P, that is, the four second elastic members 105 are arranged at an angle relative to the longitudinal axis L1 of the cleaning element 3 and the plane where the longitudinal axis L2 is located. The proximal elastic members 105A and the distal elastic members 105B are respectively obliquely arranged on two opposite sides of the median plane P, as shown in FIG. 7, the proximal elastic members 105A are located on the upper side of the median plane P and arranged at an angle relative to the median plane P, and the distal elastic members 105B are located on the lower side of the median plane P and arranged at an angle relative to the median plane P.

As shown in FIG. 7, the four second elastic members 105A and 105B respectively form angles $\alpha 1$, $\alpha 2$, $\alpha 3$, and $\alpha 4$ relative to the longitudinal axis L1. In order to avoid a transducer failure due to yielding of the elastic members, the angles $\alpha 1$, $\alpha 2$, $\alpha 3$, and $\alpha 4$ are less than or equal to 80 degrees and greater than or equal to 0 degrees, and more preferably, the angles $\alpha 1$, $\alpha 2$, $\alpha 3$, and $\alpha 4$ are less than or equal to 60 degrees and greater than or equal to 0 degrees. In the first embodiment as shown in FIG. 7, the angles $\alpha 1$, $\alpha 2$, $\alpha 3$, and $\alpha 4$ are all equal to 60 degrees. In other words, the angles between the median plane P and the planes of the four second elastic members 105A and 105B are greater than or equal to 10 degrees and less than or equal to 90 degrees, and more preferably, the angles between the median plane P and the planes of the second elastic members 105A and 105B are greater than 30 degrees and less than or equal to 90 degrees. In the embodiment shown in FIG. 7, the angles between the median plane P and the planes of the second elastic members 105A and 105B are all 30 degrees. It should be understood that, in other alternative embodiments, the angles $\alpha 1$, $\alpha 2$, $\alpha 3$, and $\alpha 4$ may alternatively be set to different values.

In the first embodiment, the first elastic members 104 and the second elastic members 105 are all fixed by means of the transducer frame 110. Specifically, as shown in FIG. 4, the transducer frame 110 includes a transducer frame portion 112 enclosing the driving shaft, and two frame fastening arms 113 disposed radially away from the transducer frame portion 112. The frame fastening arms 113 are disposed in a pair on two opposite sides of the longitudinal axis L2.

Edges 106 of the first elastic members 104 in a pair are respectively fixedly coupled to the two frame fastening arms 113, and the other edges 107 of the first elastic members 104 are fixedly coupled to the transducer frame portion 112 enclosing the driving shaft, and substantially correspond to the position of the longitudinal axis L2, the first elastic members 104A and 104B extend between the frame fastening arms 113 and the transducer frame portion 112 near the longitudinal axis L2.

Similarly, an edge 109 of each of the second elastic members 105A and 105B is fixedly coupled to the transducer frame portion 112 enclosing the driving shaft, while an opposite edge 108 is fixedly coupled to the frame fastening arm 113. In order to realize the arrangement of the second elastic members 105A and 105B at an angle relative to the median plane P, the frame protrusions 111 protrude from two opposite sides of the frame fastening arm 113. The frame protrusions 111 are part of the frame fastening arm 113. Therefore, the frame protrusions 111 may also be understood as part of the transducer frame 110. The edge 108 of each of the second elastic members 105 is fixed to a corresponding frame protrusion 111.

In other alternative embodiments, it is also possible that no frame protrusion 111 is provided. For example, the frame protrusions 111 may be replaced by thickening the frame fastening arm 113.

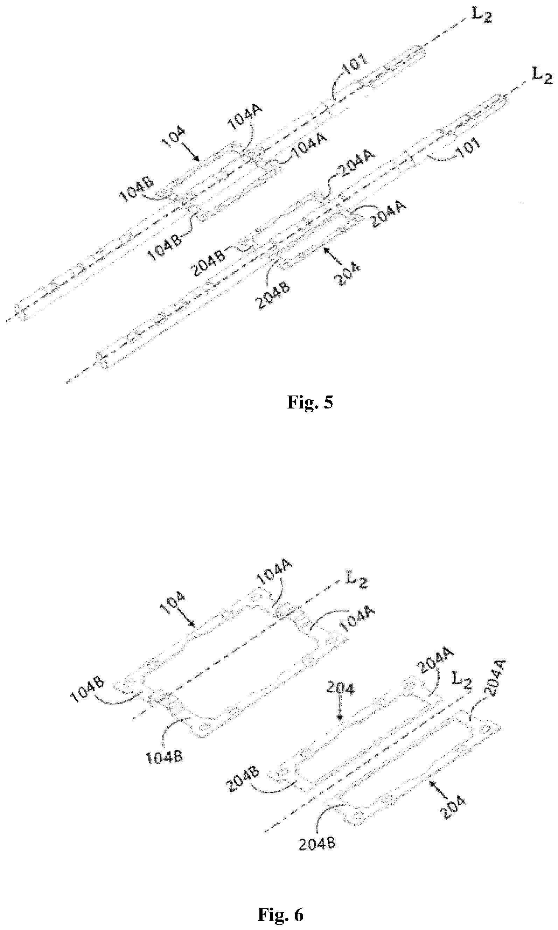

The two first elastic members 104A and the two first elastic members 104B that are distributed in a staggered manner along the longitudinal axis L2 of the driving shaft are all made of metal. As shown in FIG. 5 and FIG. 6, the two first elastic members 104A and 104B distributed along the longitudinal axis L2 of the driving shaft may form an integral first elastic member assembly. The assembly is stamped and formed from a single metal sheet, or may alternatively be formed by two elastic member assemblies each including an elastic member 204A and an elastic member 204B. In other alternative embodiments, it is also possible that four separate elastic members are included to form the first elastic member assembly. The first elastic member assembly mentioned above may still be considered as being formed by two separate first elastic members 104A distributed along the longitudinal axis L2 of the driving shaft and two separate first distal elastic members 104B distributed along the longitudinal axis L2 of the driving shaft.

More specifically, it may be considered that the proximal elastic members may include two separate second elastic members 105A, while the distal elastic members may include two separate second elastic members 105B. As shown in FIG. 4, four frame protrusions 111 are distributed on the transducer frame 110, the four frame protrusions 111 are respectively fixedly coupled to the other edges 108 of the corresponding second elastic members 105A and 105B, and the other edges 109 of the second elastic members 105A and 105B are fixedly coupled to the transducer frame portion 112 enclosing the driving shaft, so that the second elastic members 105A and 105B extend between the frame protrusions 111 and the transducer frame portion 112 enclosing the driving shaft.

As shown in FIGS. 2, 3 and 4, the first magnet 102 and the second magnet 103 of the transducer 7 are symmetrically distributed on an upper side and a lower side of the longitudinal axis L2 of the driving shaft (not matching the left-right arrangement below, that is the magnets are arranged on the upper and lower sides, and the driving coils are arranged on the left and right sides), that is, they are located above and below the median plane P, respectively. A first driving coil 121 and a second driving coil 122 are respectively located on the left and right sides of the longitudinal axis L2 of the driving shaft, and the first driving coil 121 and the second driving coil 122 are fixedly arranged relative to the handle housing, so that the driving coils 121 and 122 have no relative movement relative to the handle housing. Magnetic poles of the first magnet 102 and the second magnet 103 face toward the first driving coil 121 or the second driving coil 122, and the magnetic poles of the first magnet 102 and the second magnet 103 facing toward the same driving coil 121 or 122 are opposite to each other. As shown in FIG. 4, the magnetic pole of the first magnet 102 facing toward the second driving coil 122 is an S pole, and the magnetic pole of the second magnet 103 facing toward the second driving coil 122 is an N pole. A direction of a current I in the first driving coil 121 and the second driving coil 122 is perpendicular to a direction of magnetic lines in the first magnet 102 and the second magnet 103.

A movement analysis is performed below based on the transducer device according to the first embodiment of the present invention.

Referring to FIGS. 1 to 4, a user triggers a switch button of the electric toothbrush to activate the electric toothbrush. The circuit board 4 in the handle 1 activates the driving coils 121 and 122. An alternating current I with a frequency of f0 passes through each of the first driving coil 121 and the second driving coil 122. The direction of the current I in the first driving coil 121 is opposite to the direction of the current I in the second driving coil 122. If the direction of the current I in the first driving coil 121 is clockwise, the direction of the current I in the second driving coil 122 is counterclockwise. The magnetic poles of the first magnet 102 and the second magnet 103 facing toward the same driving coil are opposite to each other. There is no relative movement between the first driving coil 121 and the second driving coil 122 relative to the handle housing. Magnetic fields formed by the first magnet 102 and the second magnet 103 interact with the electrified first driving coil 121 and second driving coil 122 to generate electromagnetic forces. The electromagnetic forces on the first magnet 102 and the second magnet 103 are equal in magnitude and opposite in direction, and the transducer 7 receives balanced electromagnetic forces. However, since the first magnet 102 and the second magnet 103 are respectively distributed on the upper and lower sides of the longitudinal axis L2 of the driving shaft, the electromagnetic forces on the transducer 7 form an electromagnetic torque M1. Since the current I flowing through the first driving coil 121 and the second driving coil 122 is alternating, a direction of the electromagnetic torque M1 on the transducer 7 is alternating accordingly, and the transducer 7 bears a reciprocating force couple from the driving coils 121 and 122. In this way, there are electromagnetic forces on two sides of the longitudinal axis L2 of the driving shaft, and the elastic members 104 and 105 are main components that bear the electromagnetic forces. It is assumed that, in an initial state, the direction of the electromagnetic torque M1 of the transducer is counterclockwise. The electromagnetic torque M1 of the transducer causes the elastic members 104A and 104B and the second elastic members 105A and 105B to produce bending elastic deformation, and at this time, the edges of the first elastic members 104A and 104B that are fixedly coupled to the frame fastening arms 113 are fixed ends or stationary ends. In order for the first elastic members 104 to produce reciprocating bending elastic deformation under the action of the electromagnetic torque M1 to cause the transducer 7 and the cleaning assembly to perform harmonic motion, the angles between the median plane P and the elastic member planes of the first elastic members 104A and 104B are less than 30 degrees. The second elastic members 105A and 105B also produce reciprocating bending elastic deformation under the action of the electromagnetic torque M1 to cause the transducer 7 and the cleaning assembly to perform harmonic motion. In this way, the edges 109 of the second elastic members 105A and 105B that are fixedly coupled to the driving shaft 101 are used as movable ends or resonant ends for elastic deformation, and the edges 108 of the second elastic members 105A and 105B that are fixedly coupled to the frame protrusions 111 are used as fixed ends or stationary ends for elastic deformation.

In the first embodiment, the elastic members 104A and 104B are made of metal or mainly made of metal, the second elastic members 105A may be made of plastic or metal, and the second elastic members 105B are made of plastic or mainly made of plastic. In the present invention, for convenience of description, it is usually noted that the elastic member is made of metal or plastic, but it should be understood that the elastic member may be a composite of metal and plastic. When 60% or more of the stiffness coefficient of the elastic member comes from metal, it is said that the elastic member is mainly made of metal. When 60% or more of the stiffness coefficient of the elastic member comes from plastic, it is said that the elastic member is mainly made of plastic. When neither of the stiffness coefficient contributions of metal and plastic is greater than 60% of the stiffness coefficient of the elastic member, the elastic member is a composite of metal and plastic.

When the second elastic members 105 are made of plastic or mainly made of plastic, as shown in FIG. 4, the widths of the second elastic members 105A and 105B are set to be greater than the widths of the first elastic members 104A and 104B.

An analysis is performed below taking an example in which the material of the elastic members 105A and 105B is plastic.

According to the principle of solid mechanics, in a bending elastic deformation state, the elastic members are equivalent to linear springs. Taking a cuboid elastic member as an example, the stiffness coefficient of a linear spring equivalent to the elastic member is:

$$K = 3 * E * I_z/(a^3),$$

where E is the elastic modulus of the material, $I_z$ is an inertia moment of the elastic member corresponding to a driving force or a driving force moment, and a is a distance from an action point of the driving force on the elastic member to an edge 106 of the elastic member 104 or an edge 108 of the elastic member 105 where the elastic member is stationary relative to the handle housing. a of the first elastic members 104A and 104B is first elastic member $a_1$, a of the second elastic members 105A and 105B is second elastic member $a_2$. The corresponding spring stiffness coefficient of the first elastic members 104A and 104B is a first elastic member stiffness coefficient $K_1$, and the corresponding spring stiffness coefficient of the second elastic members 105A and 105B is a second elastic member stiffness coefficient $K_2$.

In the first embodiment, preferably, the elastic modulus $E_1$ of the material of the first elastic members 104A and 104B is 20 times greater than the elastic modulus $E_2$ of the material of the second elastic members 105A and 105B. For example, the material of the first elastic members 104A and 104B is stainless steel, the elastic modulus $E_1$ is 196 GPa, the material of the second elastic members 105A and 105B is POM, and the elastic modulus $E_2$ is 2.5 GPa. An inertia moment of the first elastic members 104A and 104B relative to the electromagnetic torque M1 is a first elastic member inertia moment Izi, and an inertia moment of the second elastic members 105A and 105B relative to the electromagnetic torque M1 is a second elastic member inertia moment $I_{Z2}$. According to solid mechanics, an inertia moment of a cuboid is:

$$I_Z = b * h * h * h/12,$$

where b is the width of the corresponding elastic member, and h is the thickness of the corresponding elastic member. In the first embodiment, preferably, b in the inertia moment $I_{Z1}$ of the first elastic members 104A and 104B is 1.3 mm, b in the inertia moment $I_{Z2}$ of the second elastic members 105A and 105B is 3.5 mm, h in the inertia moment $I_{Z1}$ of the first elastic members 104A and 104B is 0.16 mm, and h in the inertia moment $I_{Z2}$ of the second elastic members 105A and 105B is 0.3 mm. Referring to the second elastic member 105B in the upper left corner of FIG. 7 and the first elastic member 104B on the left in FIG. 7, the second elastic member $a_2 * \cos(\beta_1 - \alpha_1)$ is greater than or equal to the first elastic member $a_1$. In the first embodiment, $\beta_1$ is 90 degrees, and $\alpha_1$ is 60 degrees. Obviously, the angles between the planes of the first elastic members and the longitudinal axis L1 of the cleaning element are the angle $\beta$. The angles between the planes of the second elastic members and the longitudinal axis of the cleaning element are the angle $\alpha$, and the angle $\beta1$ is greater than the angle $\alpha1$. The edges 107 of the first elastic members are fixedly coupled to the transducer frame portion 112 enclosing the driving shaft, the other edges 106 of the first elastic members are fixedly coupled to the frame fastening arms 113, the edges 109 of the second elastic members are fixedly coupled to the transducer frame portion 112 enclosing the driving shaft, and the other ends of the second elastic members are fixedly coupled to the frame protrusions 111, thereby ensuring that the second elastic member $\alpha_2$ is greater than the first elastic member $a_1$. After calculation, $E_1 * I_{z1}/(a_1{}^3)$ for the first elastic members is 6.8 times greater than $E_2 * I_{z2}/(a_2{}^3)$ for the second elastic members, that is, the first elastic member stiffness coefficient $K_1$ is 6.8 times greater than the second elastic member stiffness coefficient $K_2$. In the first embodiment, the equivalent mass of a vibrating body composed of the transducer 7 and the cleaning assembly relative to the longitudinal axis L2 of the driving shaft is $M_m$, and a natural frequency of the vibrating body is $f_n$, then

$$2 * 3.14 * f_n = \sqrt{Kn/Mn},$$

where $K_n$ is a sum of all the first elastic member stiffness coefficients and all the second elastic member stiffness coefficients. A sum of all the first elastic member stiffness coefficients is $K_{1t}$, and a sum of all the second elastic member stiffness coefficients is $K_{2t}$.

When a driving frequency $f_0$ is equal to the mechanical natural frequency $f_n$, the mechanical portion is in forced resonant motion. When the alternating current I with the frequency of f0 passes through the driving coils, the transducer 7 and the cleaning assembly are subjected to electromagnetic forces with the frequency of $f_0$, and the frequency $f_0$ of the driving force is between 85% and 115% of the natural frequency $f_n$ of the transducer 7. According to the principle of simple harmonic vibration, generally, when the frequency $f_0$ of the driving force is between 85% and 115% of the mechanical natural frequency $f_n$, it may be considered that the mechanical portion is in forced harmonic motion, and the electrical energy of harmonic motion and resonant motion is converted into mechanical energy with a high efficiency. During the harmonic motion of the transducer 7 and the cleaning assembly, the elastic members will consume part of energy due to an internal force of the material, which is equivalent to the energy consumed by the internal resistance of the material, this part of energy is manifested in the heating phenomenon of the material of the elastic members, and the smaller the elastic modulus of the material, the greater the internal resistance, and the higher the temperature rise of the material. Therefore, the first elastic members 104A and 104B are mainly made of metal and have a higher elastic modulus, while the second elastic members 105A and 105B are mainly made of plastic, the second elastic members 105A and 105B have a smaller elastic modulus, and the heat dissipation effect of the metal material is much better than the heat dissipation effect of the plastic material. In the harmonic motion of the transducer 7 and the cleaning assembly, the temperature rise of the first elastic members 104A and 104B is much lower than the temperature rise of the second elastic members 105A and 105B. The temperature rise will cause the elastic modulus of the material of the elastic members to decrease, thereby making the stiffness coefficients of the elastic members smaller. In an embodiment where the second elastic members 105A and 105B are made of plastic, the temperature rise of the first elastic members 104A and 104B has a limited impact on the stiffness coefficients of the first elastic members, and thus can be ignored. The temperature rise of the second elastic members 105A and 105B has a greater impact on the stiffness coefficients of the second elastic members. In order to keep the transducer 7 and the cleaning assembly in a harmonic motion state throughout a working period, according to the above formulas and principle analysis, assuming that the stiffness coefficients of the second elastic members 105A and 105B decrease to zero due to the temperature rise, when $(K_{1t} + K_{2t})^2/(K_{1t})^2 < 1.15/0.85$, and when $K_{1t} > 6.13K_{2t}$, the transducer 7 and the cleaning assembly are in the harmonic motion state throughout the working period. The spring stiffness coefficient in the natural frequency of the transducer 7 and the cleaning assembly mainly depends on the stiffness coefficients of the first elastic members 104A and 104B. In the first embodiment, the sum of all the first elastic member stiffness coefficients is 6.13 times greater than the sum of all the second elastic member stiffness coefficients, thereby ensuring that the transducer is in an efficient harmonic vibration state throughout the working period.

In other alternative embodiments, the proximal elastic members 105A may be made of metal or mainly made of metal, the distal elastic members 105B may be made of plastic or mainly made of plastic, and the sum of the stiffness coefficients of all the first elastic members and the sum of the stiffness coefficients of all the proximal second elastic members is 6.13 times greater than the sum of the stiffness coefficients of all the second lower elastic members. In this case, the material of the first elastic members 104A and 104B is metal, the material of the second elastic members 105B is plastic, and the elastic modulus of the first elastic members 104A and 104B is 20 or more times greater than the elastic modulus of the second elastic members 105B. The angles between the first elastic member planes and the longitudinal axis of the cleaning element are the angle $\beta$. The angles between the second elastic member planes and the longitudinal axis of the cleaning element are the angle $\alpha$, and the angle $\beta$ is greater than the angle $\alpha$.

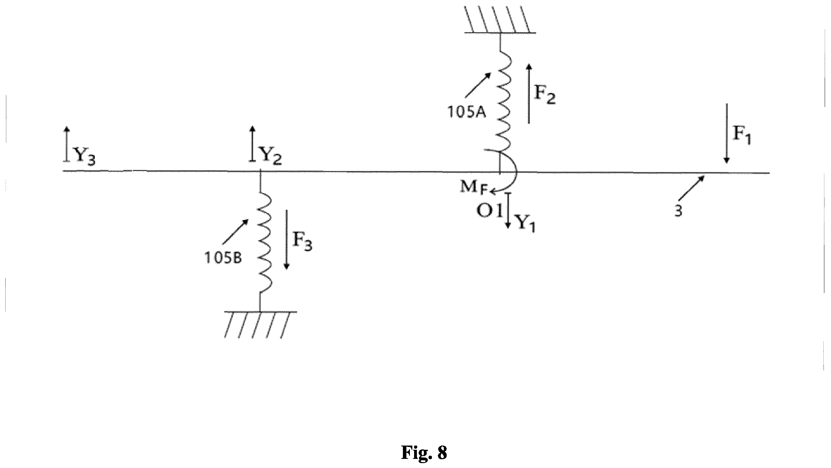

FIG. 8 shows a force diagram of elastic members and a cleaning assembly along a longitudinal axis according to a preferred embodiment of the present invention. As shown in FIG. 8, the force applied on the cleaning element 3 is F1, an equivalent force on the second elastic members 105A is F2, and an equivalent force on the second elastic members 105B is F3. The force F1 applied on the cleaning element 3 is approximately parallel to the longitudinal axis L1 of the cleaning element. In the present invention, the planes of the second elastic members 105A and 105B form an angle α of less than 80 degrees, specifically 60 degrees, relative to the longitudinal axis L1 of the cleaning element. When the force F1 is applied on the cleaning element 3, the second elastic members 105A and 105B can generate component forces parallel to the longitudinal axis L1 of the cleaning element. Since the edges 109 of the second elastic members 105A and 105B are fixedly coupled to the transducer frame portion 112, and the other edges 108 are fixedly coupled to the frame protrusions 111, according to the principles of force moment balance and force balance, the direction of the equivalent force F2 on the second elastic members 105A is opposite to the direction of the force F1, the direction of the equivalent force F3 on the second elastic members 105B is the same as the direction of the force F1, the second elastic members 105A are in a stretched state to generate the equivalent force F2, and the second elastic members 105B are in a stretched state to generate the equivalent force F3. In addition, component forces of the force F1 in a direction perpendicular to the planes of the second elastic members 105A and 105B cause force bending deformation of the second elastic members. This force bending deformation will additionally increase the internal stress of the second elastic members, which may cause the second elastic members to yield, thereby causing a drastic change in the natural frequency of the transducer 7, consequently causing a failure of the transducer. In the present invention, the angle α is less than 80 degrees and greater than or equal to 0 degrees. More preferably, the angle α is less than or equal to 60 degrees and greater than or equal to 0 degrees, so that the component forces of the force F1 in the direction perpendicular to the planes of the second elastic members 105A and 105B are effectively reduced, thereby reducing the force bending deformation of the second elastic members 105A and 105B caused by the force F1.

Importantly, the inventors have found that a distance between the equivalent force F2 on the second elastic members 105A and the equivalent force F3 on the second elastic members 105B is particularly important for the force moment balance. Through a large number of experiments and based on the feasibility of the production process, along the direction of the longitudinal axis L2 of the driving shaft, a distance between a center line L3 of the second elastic member 105A and a center line L4 of at least one second elastic member 105B is 3.5 mm or more, and the center line refers to a second elastic member plane center line that is located on the plane of the second elastic member 105A or 105B and points from the respective frame protrusion 111 to the transducer frame portion 112 enclosing the driving shaft, or it may be understood that, the center line refers to a second elastic member plane center line that is located on the plane of the second elastic member 105A or 105B and points from the transducer frame 110 to the transducer frame portion 112 enclosing the driving shaft. Since the distance between the center line L3 of at least one proximal second elastic member and the center line L4 of at least one distal second elastic member is 3.5 mm or more, it is more possible to avoid torsional deformation of the second elastic member 105 caused by the force F1 on the cleaning element 3 compared to the case where only one second elastic member 105A is provided, so as to avoid an excessive stress of the second elastic member, thereby avoiding a failure of the transducer 7.

Continuing to refer to FIGS. 8, 9 and 10, in the present invention, the stretching or compression of the materials of the second elastic members 105A and the second elastic members 105B can be used to balance the force F1 on the cleaning element and the force moment $M_F$ generated by the force F1 on the cleaning element. An action point of the force of the corresponding proximal second elastic member 105A on the driving shaft 101 is point O1, the force moment $M_F$ generated by the force F1 on the cleaning element is a force moment formed by the force F1 on the cleaning element relative to the point O1, and the direction of the force moment $M_F$ is clockwise. According to the force analysis and force moment balance in FIG. 8, the materials of the second elastic members 105A and 105B are stretched, a distance by which the second elastic members 105A are stretched is $Y_1$, and a distance by which the material of the second elastic members 105B is stretched is $Y_2$. According to Hooke's law, $Y_2$ is directly proportional to (F3/E), the equivalent force F3 on the second elastic members 105B has a function of balancing the force moment $M_F$, and E is the elastic modulus of the material of the second elastic members 105B. In the present invention, the material of the second elastic members 105B is plastic, the material of the first elastic members 104 is metal, and the elastic modulus of the material of the first elastic members 104 is twenty or more times greater than the elastic modulus of the material of the second elastic members 105B. In the present invention, since the second elastic members 105B made of plastic are creatively introduced, due to $Y_2$ in direct proportion to (F3/E), under the conditions of the same F3 and the same force F1 on the cleaning element, the second elastic members 105B made of plastic can produce a distance $Y_2$, by which the material of the second elastic members 105B is stretched, that is 20 or more times greater than that of the second elastic members 105B made of metal.

In other alternative embodiments, the second elastic members 105A and 105B may be rotated 180 degrees about the longitudinal axis L2 of the driving shaft, then $Y_2$ becomes a distance by which the material of the second elastic members 105B is compressed, and therefore $Y_2$ is the distance by which the material of the second elastic members 105B is stretched or compressed.

Advantageously, the driving shaft based on the proximal elastic members 105A, the distal elastic members 105B, and the transducer frame can constitute a pressure alarm mechanism for the electric toothbrush, which is configured to send an alarm when the cleaning action force applied on a brush head exceeds a predetermined value. The pressure alarm mechanism includes a sensing device. The sensing device includes at least one movable component disposed on the magnet at the distal end of the driving shaft or on the transducer frame, preferably, disposed at the distal end of the magnet or at the distal end of the transducer frame along the longitudinal axis L2. When the cleaning action force F1 is applied to the proximal end, the movable component generates a third displacement $Y_3$ in the second direction, and when the cleaning action force F1 exceeds the maximum force $F1_M$, the displacement of the movable component causes an alarm device of the pressure alarm mechanism to generate an alarm indication.

Referring to the example of FIG. 8, under the action of the force F1 on the cleaning element, the second elastic members 105B and part of the driving shaft at this position will generate a displacement $Y_2$ opposite to the direction of the force F1 on the cleaning element. The part of the transducer frame 110 that is farther away from the cleaning element 3 than the second elastic members 105A and the magnets, under the action of the force F1 on the cleaning element, generate a displacement $Y_3$ opposite to the direction of the force F1 on the cleaning element. Since the second elastic members 105B and the second elastic members 105A are fixedly coupled to the transducer frame portion 112 enclosing the driving shaft, the displacement $Y_3$ is directly proportional to the displacement $Y_2$.

In the first embodiment, as shown in FIG. 4, the movable component includes a frame follower 114 arranged at the tail of the transducer frame 110 away from the cleaning element 3, the frame follower 114 has a convex shape, under the action of the force F1 on the cleaning element, the second elastic members 105B are in an elastic deformation state, the frame follower 114 generates a displacement $Y_3$ opposite to the direction of the force F1 on the cleaning element, and the displacement $Y_3$ increases with the force F1 on the cleaning element. An LED light source 402 and a photosensitive apparatus 401 are respectively arranged on two sides of the circuit board 4 near the frame follower 114 and serve as a sensing device. As a luminous flux received by the photosensitive apparatus 401 changes, an equivalent resistance of the photosensitive apparatus 401 changes accordingly, and the circuit board 4 senses changes in the force F1 by detecting the magnitude of the equivalent resistance of the photosensitive apparatus 401. When a user increases the force F1 applied on the cleaning element 3, the displacement $Y_3$ of the frame follower 114 increases, the frame follower 114 further enters a gap between the light source 402 and the photosensitive apparatus 401, the luminous flux obtained by the photosensitive apparatus 401 from the light source 402 decreases accordingly, the equivalent resistance of the photosensitive apparatus 401 increases, and the circuit board 4 detects the increase in the equivalent resistance of the photosensitive apparatus 401, thereby identifying the increase in the force F1 on the cleaning element. When the force F1 on the cleaning element reaches a preset threshold, the electric toothbrush can remind the user, by means of sound, light, vibration, or the like, that the force F1 on the cleaning element is too great, and remind the user to reduce the force F1 applied on the cleaning element. Similarly, when the user reduces the force F1 applied on the cleaning element 3, the displacement $Y_3$ of the frame follower 114 decreases, the frame follower 114 reduces the gap between the light source 402 and the photosensitive apparatus 401, the luminous flux obtained by the photosensitive apparatus 401 from the light source 402 increases accordingly, the equivalent resistance of the photosensitive apparatus 401 decreases, and the circuit board 4 detects that the equivalent resistance of the photosensitive apparatus 401 decreases, implementing identification of the increase in the force F1 on the cleaning element. When the force F1 on the cleaning element is less than a preset threshold for an excessive force, the electric toothbrush exits the reminders in the form of sound, light and vibration.

In the embodiments according to the present invention, the displacement $Y_3$ is effectively amplified due to the lower second elastic members 105B that are made of plastic or mainly made of plastic, that is, a displacement opposite to the direction of the force F1 on the cleaning element that is generated under the action of the force F1 on the cleaning element by part of the transducer frame 110 farther away from the cleaning element 3 than the second elastic members 105A and the magnets is effectively amplified.

The embodiment of the alarm mechanism may be appropriately modified, for example, a through hole may be provided in the frame follower 114. When the force F1 on the cleaning element is zero, light from the light source 402 does not pass through or a small amount of the light passes through the through hole of the frame follower 114 and is incident on a photosensitive surface of the photosensitive apparatus 401, and the rest of the frame follower 114 blocks the light from the light source 402 from being incident on the photosensitive surface of the photosensitive apparatus 401. At this time, the equivalent resistance of the photosensitive apparatus 401 is relatively large. When the force F1 on the cleaning element increases, more light of the LED 402 passes through the through hole of the frame follower 114 and is incident on the photosensitive surface of the photosensitive apparatus 401. At this time, the equivalent resistance of the photosensitive apparatus 401 decreases, thereby implementing detection of the circuit board 4 on the amount of the force F1 on the cleaning element.

In the above embodiment, the frame follower 114 has a convex shape relative to the surfaces of the magnets. Certainly, the frame follower 114 may be in a concave shape, a flat shape, or a curved surface shape, and a displacement $Y_3$ of one of the surfaces may be used to make at least one surface of the follower 114 close to or away from the photosensitive apparatus 401, such that an incident angle at which the photosensitive apparatus 401 can receive the light from the light source 402 changes, thereby making a luminous flux on the photosensitive apparatus 401 change monotonically with the monotonic change of the force F1 on the cleaning element.

The magnets may also be used as a movable component of the sensing device, the displacement $Y_3$ of the magnets away from the cleaning element may be used, a magnetic field induction apparatus such as a Hall element or a coil is mounted on the circuit board 4, and the displacement $Y_3$ of the magnets results in a change in a magnetic field intensity on the magnetic field induction apparatus, thereby causing a change in a voltage value of the magnetic field induction apparatus, thus enabling the circuit board 4 to detect the amount of the force F1 on the cleaning element.

In addition, preferably, the transducer device is set to have a start-up force F4. Specifically, springs may be mounted on the part of the transducer frame 110 farther away from the cleaning element than the second elastic members 105A and the magnets for pre-tightening. Only when the force F1 on the cleaning element is greater than the start-up force F4 of the cleaning element, the proximal second elastic members and the distal second elastic members can generate the displacement $Y_2$ and displacement $Y_3$, respectively.

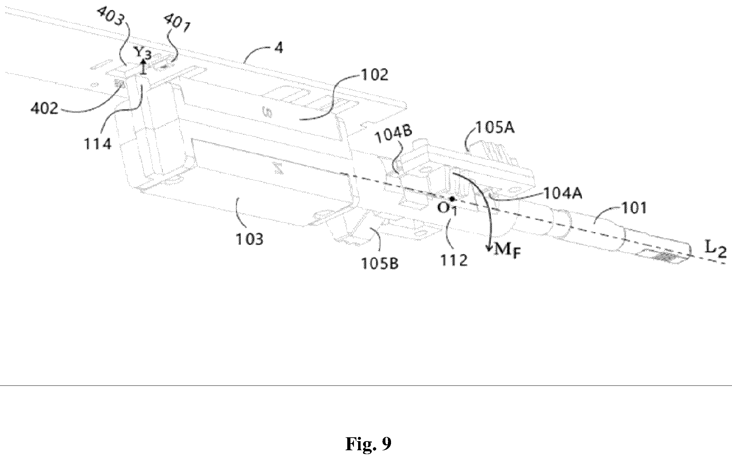

As the force F1 increases, the forces F2 and F3 related to the elastic members will increase, and the increased F2 and F3 will cause the second elastic members to yield and lose their elasticity. In the present invention, the transducer device is further provided with a maximum force limiting portion that limits the force F1 to the maximum force $F1_M$, that is, the transducer device is configured to have the maximum force $F1_M$. In the embodiment of FIG. 9, a through hole 403 is formed in the circuit board, and the through hole 403 may allow the passage of the frame follower 114 to come into contact with the handle housing. When the force F1 on the cleaning element 3 is greater than or equal to the maximum force $F1_M$ of the cleaning element, the frame follower 114 comes into contact with the handle housing, and the handle housing constitutes the maximum force limiting portion, which limits the further movement of the frame follower 114, and the displacement $Y_2$ and the displacement $Y_3$ will no longer increase, thereby ensuring that the second elastic members are always within a range of elastic deformation. Only when the force F1 is less than the maximum force $F1_M$ and greater than the start-up force F4 of the cleaning element, as the force F1 changes monotonically, the displacement $Y_2$ and displacement $Y_3$ change monotonically.

For the electric toothbrush, preferably, the maximum force $F1_M$ of the cleaning element ranges from 2.5 N to 10 N, and the start-up force F4 of the cleaning element is greater than or equal to 0 N and less than or equal to 2 N. As the force F1 on the cleaning element exceeds the maximum force $F1_M$ of the cleaning element and continues to increase monotonically, the handle housing or a part stationary relative to the handle housing constrains the transducer 7, such that the displacement $Y_2$ and displacement $Y_3$ no longer change monotonically.

Based on the harmonic vibration analysis and mechanical analysis above, the force F1 on the cleaning element 3 will cause additional bending deformation of the first elastic members 104A and 104B. However, since the present invention introduces the second elastic members 105A and 105B to balance the force and force moment caused by the force F1 on the cleaning element 3, the additional bending deformation of the first elastic members 104A and 104B caused by the force F1 on the cleaning element 3 is greatly reduced, so that the transducer 7 can work in the harmonic vibration state for a long life, and the second distal elastic members 105B have a limited impact on the spring stiffness coefficient at the natural frequency of the transducer, making the frequency adjustment of the transducer 7 easy. The first elastic members 104A and 104B and the second elastic members 105A and 105B may be formed by an injection molding process, and the transducer 7 is easy to manufacture.

As a variant of the first embodiment, there may alternatively be only one first elastic member, such as only one upper first elastic member 104A located on the left side of the driving shaft in FIG. 4, or only one lower first elastic member 104B located on the right side of the driving shaft in FIG. 4, the one first elastic member can still meet the above requirements for the combination of first elastic members, and the one first elastic member can still achieve the purpose of the present invention.

As another variant of the first embodiment, there may alternatively be only two second elastic members. The two second elastic members include one second elastic member 105A and one second elastic member 105B, for example, only one second elastic member 105A located on the left side of the driving shaft in FIG. 4 and only one second elastic member 105B on the right side of the driving shaft in FIG. 4. The two second elastic members are respectively located on two sides of the median plane P and are also located on two sides of a perpendicular plane that is perpendicular to the median plane P and includes the longitudinal axis L2. The elastic assembly consisting of one second elastic member 105A and one second elastic member 105B can still meet the requirements of the present invention for the combination of second elastic members, and can achieve the purpose of the present invention.

In other variations, the second elastic members may be located on the same side of the median plane P, or may be located on the same side of a perpendicular plane perpendicular to the median plane P and including the longitudinal axis L2.

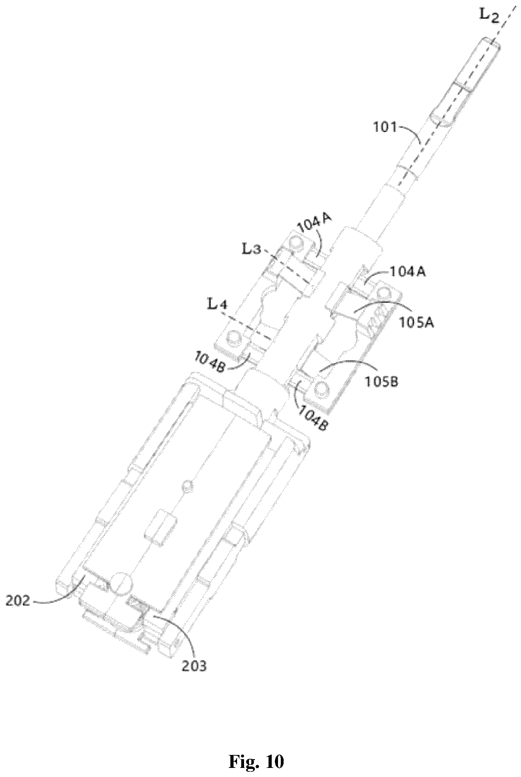

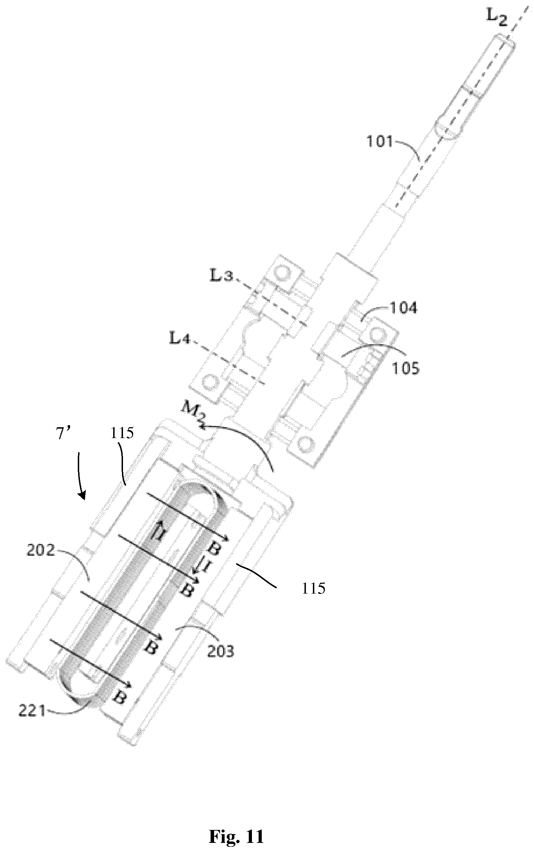

FIG. 10 and FIG. 11 show perspective views of a transducer device according to a second embodiment of the present invention, in which a magnet-coil mechanism of the transducer device has a structure different from that of the magnet-coil mechanism in the first embodiment. As shown in FIGS. 10 and 11, a driving coil 221 is centrally arranged relative to the longitudinal axis L2 of the driving shaft, magnets 202 and 203 are respectively distributed on two sides of the driving coil 221, and the transducer frame 110 is centered on the longitudinal axis L2 of the driving shaft and extends toward two sides and further downward to form two supporting arms 115. The two magnets are respectively fastened to the respective supporting arms 115. A magnetic field formed by the magnets passes through the driving coil. Through the analysis similar to the above, the arrangement of the magnets 202 and 203 and the driving coil 221 shown in FIGS. 10 and 11 can still achieve the purpose of the present invention.

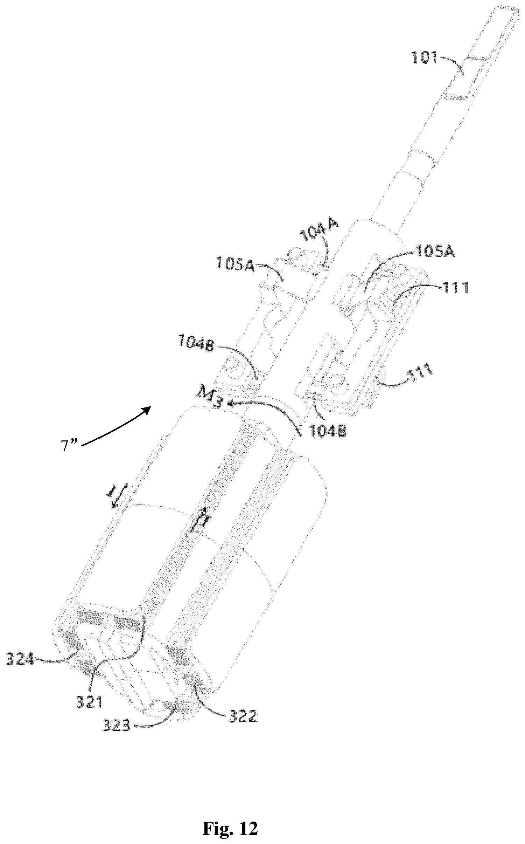

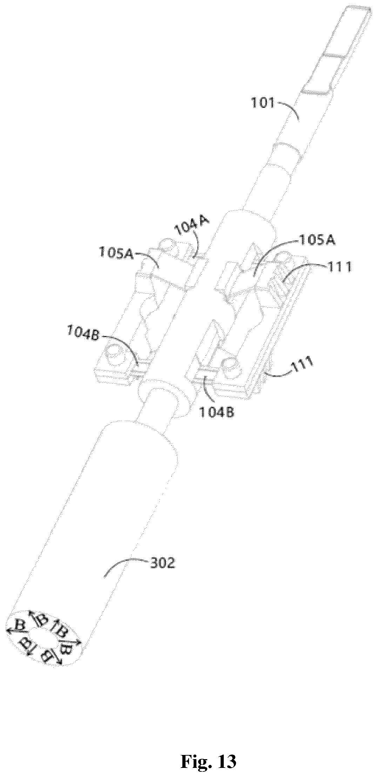

FIG. 12 and FIG. 13 show perspective views of a transducer according to a third embodiment of the present invention. For example, referring to FIGS. 12 and 13, one hollow cylindrical magnet 302 is fastened to the driving shaft 101, driving coils 321, 322, 323, 324 are arranged around an outer periphery of the hollow cylindrical magnet. A magnetic field formed by the magnet passes through the driving coils. Through the analysis similar to the above, the arrangement of the magnet and the driving coils shown in FIGS. 12 and 13 can still achieve the purpose of the present invention.

Certainly, positions of the magnet, the driving coils, and the elastic members may be changed relative to the cleaning element 3, for example, the magnet and the driving coils are closer to the cleaning element 3, or the magnet and the driving coils are between the two second elastic members.

In the existing transducer device of the cleaning appliance, the fixed end or stationary end of the elastic member is located on the longitudinal axis of the driving shaft, $a_{cn}$ is a distance from the driving force to the longitudinal axis of the driving shaft and is also a in the formula for calculating the stiffness coefficient of the elastic member, the force couple of the driving force is the driving force multiplied by $a_{cn}$, and $a_{cn}$ needs to be large enough while maintaining a smaller driving force to ensure a sufficient force couple. In order to maintain a suitable stiffness coefficient of the elastic member, the size of the elastic member needs to be slightly larger. In addition, since the other end of the elastic member is fixedly coupled to the transducer transmission arm, the size of the existing transducer device is larger.

In this embodiment, the first elastic members 104 thus bear the electromagnetic torque M1 on the driving shaft. There are two frame fastening arms 113 distributed on the transducer frame 110. The two frame fastening arms 113 are respectively fixedly coupled to the other edges 106 of the corresponding first elastic members 104A and 104B. The edges 107 of the first elastic members 104A and 104B are fixedly coupled to the transducer frame portion 112. The transducer frame portion 112 enclosing the driving shaft encloses part of the driving shaft 110. The first elastic members 104A and 104B extend between the frame fastening arms 113 and the transducer frame portion 112 enclosing the driving shaft. The distance from the longitudinal axis L2 of the driving shaft to the edge 106 of the first elastic member is a in the formula for calculating the stiffness coefficient of the elastic member. The distance from the longitudinal axis L2 of the driving shaft to the other end 106 of the first elastic member has no direct relationship with the force arm of the electromagnetic force couple M1. Therefore, the distance from the longitudinal axis L2 of the driving shaft to the edge 106 of the first elastic member may be small enough, the size of the elastic member may be smaller, and the overall size of the transducer 7 may be smaller, thereby realizing miniaturization of the cleaning apparatus.

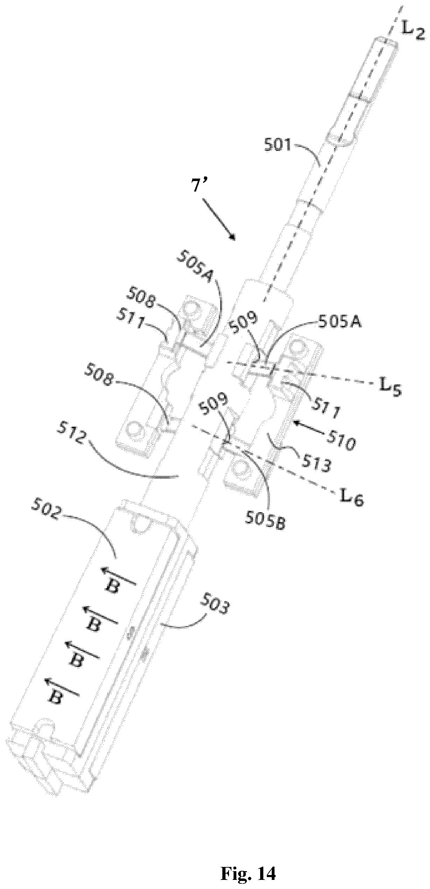

In the first embodiment, when the transducer 7 is in a harmonic vibration state, the staggered distribution of the second elastic members 105A and the plastic second elastic members 105B along the longitudinal axis L2 of the driving shaft is used to realize amplification of the displacement $Y_3$ caused by the force F1 on the cleaning element, thereby implementing detection of the force F1 on the cleaning element. Detection of the force F1 on the cleaning element is required in some cleaning appliances, such as in electric toothbrushes, and an excessive force F1 on the cleaning element may damage the gums, so it is necessary to remind the user of the amount of the force F1. However, in some other applications, the cleaning appliance does not have a strong requirement for the detection of the force F1 on the cleaning element, but it is hoped that the transducer and the cleaning assembly are within a harmonic vibration range, and the force F1 on the cleaning element can be greater. To this end, the present invention provides another solution, which is to replace the materials of all the second elastic members in the above embodiments with metal, that is, a fourth embodiment of the transducer device shown in FIGS. 14, 15, 16 and 17.

In the fourth embodiment, the transducer 7' includes a driving shaft 501, two proximal elastic members 505A distributed along a longitudinal axis L2 of the driving shaft, two distal elastic members 505B distributed along the longitudinal axis L2 of the driving shaft, magnets 502 and 503, and a transducer frame 510. The two magnets 502 and 503 are both fixed to the transducer frame 510. The material of the transducer frame 510 is plastic. The driving shaft 501, the proximal elastic members 505A, and the distal elastic members 505B are coupled together by means of the transducer frame 510. The magnets 502 and 503 are fixedly coupled, by means of glue, screws, or injection molding, to the tail of the transducer frame away from the cleaning element.

In the fourth embodiment, an elastic assembly of the transducer 7' should include at least one proximal elastic member 505A and one distal elastic member 505B, and the one second proximal elastic member 505A and the one second distal elastic member 505B are respectively located on two opposite sides of a median plane P where the longitudinal axis L2 of the driving shaft is located. The one proximal elastic member 505A and the one distal elastic member 505B that are distributed on the two sides of the median plane P can withstand electromagnetic forces from two sides of the longitudinal axis L2 of the driving shaft, thereby balancing forces of the transducer and reducing noise and impact.

In the fourth embodiment of the present invention, the transducer 7' is provided with two proximal elastic members 505A and two distal elastic members 505B. The proximal elastic members 505A and the distal elastic members 505B have different inclination angles and are staggered from front to back along the longitudinal axis L2. The proximal elastic members 505A are closer to the proximal end of the driving shaft 501 than the distal elastic members 505B.

Similar to the structure in the first embodiment, the transducer frame 510 includes a frame portion 512 enclosing the driving shaft and frame fastening arms 513, and frame protrusions 511 protrude from the frame fastening arms 513. The proximal elastic members 505A and the distal elastic members 505B are respectively fixedly coupled to the frame protrusions 511 and the frame portion 512 enclosing the driving shaft.

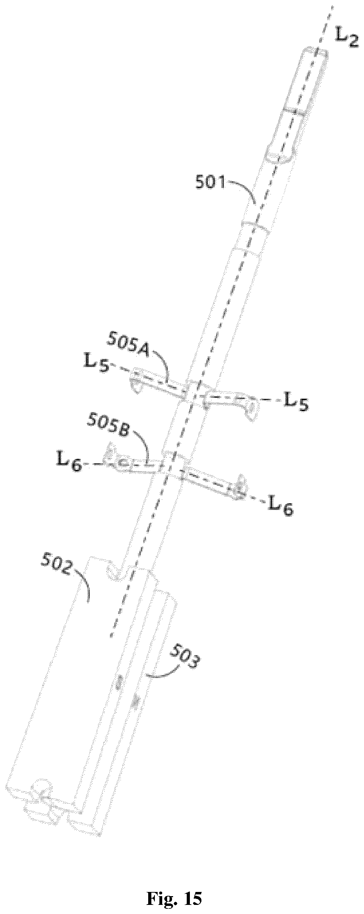

As shown in FIG. 15, four frame protrusions 511 are distributed on the transducer frame 510, the four frame protrusions 511 are respectively fixedly coupled to edges 508 of the corresponding elastic members 505A and 505B, and the other edges 509 of the elastic members 505A and 505B are fixedly coupled to the transducer frame portion 512 enclosing the driving shaft 501, so that the elastic members 505A and 505B extend between the frame protrusions 511 and the transducer frame portion 512 enclosing the driving shaft. In other alternative embodiments, the frame protrusions 511 may be replaced by thickening the frame fastening arms 513 without affecting the implementation of the present invention.

The elastic members 505A and 505B are roughly cuboids, a distance of each of the elastic members 505A and 505B from the frame protrusion 511 to the transducer frame portion 512 enclosing the driving shaft is the length of the elastic member, a distance of each of the elastic members 505A and 505B along the direction of the longitudinal axis of the driving shaft is the width of the elastic member, and the length of the remaining dimension of the cuboid is the thickness of the elastic member. A plane formed by the length and the width of each of the elastic members 505A and 505B is an elastic member plane. The elastic member plane is a plane that connects the respective frame protrusion 511 and the transducer frame portion 512 enclosing the driving shaft. Preferably, an angle between the plane and the longitudinal axis L2 of the driving shaft is less than 30 degrees. In this embodiment, angles between the planes of the four elastic members 505A and 505B and the longitudinal axis L1 of the cleaning element are $\delta 1$, $\delta 2$, $\delta 3$, and $\delta 4$, respectively. In this embodiment, $\delta 1$, $\delta 2$, $\delta 3$, and $\delta 4$ are all equal to 60 degrees. In other words, angles between the median plane P and the planes of the elastic members 505A and 505B are 30 degrees. It should be understood that, in other alternative embodiments, $\delta 1$, $\delta 2$, $\delta 3$, $\delta 4$ may be set to different values.

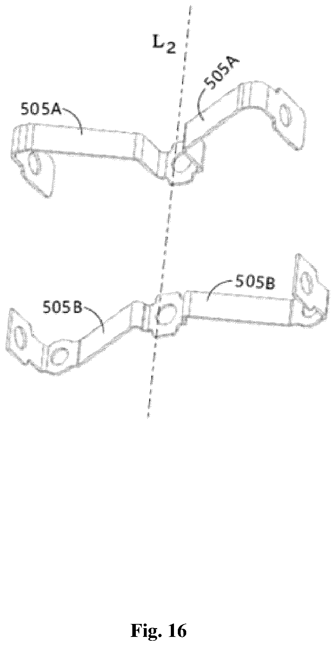

In the fourth embodiment, the materials of both the proximal elastic members 505A and the distal elastic members 505B are metal. The elastic members 505A and 505B may form two separate elastic bodies along the longitudinal axis as shown in FIG. 16. Each of the elastic bodies includes two symmetrically arranged elastic members. Each separate elastic body is provided with a through hole in the middle and through holes in two ends, and these through holes are used to fix the elastic body to the longitudinal axis of the transducer frame. In other alternative embodiments it is also possible that four separate elastic members are combined into an elastic member assembly. Certainly, the elastic members of the transducer may alternatively be arranged in other ways, and these ways will also fall within the scope of the present invention.

As shown in FIG. 14, the tail of the transducer frame away from the cleaning element encloses the driving shaft 501 and the magnets 502 and 503 are symmetrically distributed on two sides of the longitudinal axis L2 of the driving shaft. The first driving coil and the second driving coil are respectively located on the two sides of the longitudinal axis L2 of the driving shaft, and there is no relative movement between the first driving coil and the second driving coil and the handle housing. The magnets 502 and 503 have opposite magnetic poles when facing toward the same driving coil. For example, the magnetic pole of the magnet 502 facing toward the second driving coil is an S pole, and the magnetic pole of the magnet 503 facing toward the second driving coil is an N pole. A direction of a current I in the first driving coil and the second driving coil is perpendicular to a direction of magnetic lines in the magnets 502 and 503.

The motion analysis of the transducer 7' in the fourth embodiment is similar to the motion analysis of the transducer 7 in the first embodiment, and will not be described again.

In the fourth embodiment according to the present invention, the materials of the proximal and distal elastic members 505A and 505B are metal. According to the principle of solid mechanics, in a bending elastic deformation state, the elastic members are equivalent to linear springs. Taking a cuboid elastic member as an example, the stiffness coefficient of a linear spring equivalent to the elastic member

$$\text{is } K = 3 * E * I_z/(a^3),$$

where E is the elastic modulus of the material, $I_z$ is an inertia moment of the elastic member corresponding to a driving force or a driving force moment, and a is a distance from an action point of the driving force on the elastic member to the other edge 508 of the elastic member where the elastic member is stationary relative to the handle housing.

When the driving frequency $f_0$ is equal to the mechanical natural frequency $f_n$, the mechanical portion is in forced resonant motion. When the alternating current I with the frequency of $f_0$ passes through the driving coils, the transducer 7' and the cleaning assembly are subjected to electromagnetic forces with the frequency of $f_0$, and the frequency $f_0$ of the driving force is between 85% and 115% of the natural frequency $f_n$ of the transducer 7'. According to the principle of simple harmonic vibration, generally, when the frequency $f_0$ of the driving force is between 85% and 115% of the mechanical natural frequency $f_n$, it may be considered that the mechanical portion is in forced harmonic motion, and the electrical energy of harmonic motion and resonant motion is converted into mechanical energy with a high efficiency.

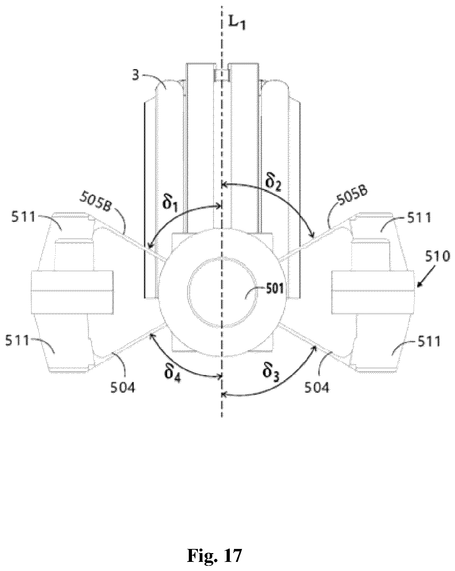

Similarly, referring to FIG. 8, the force applied on the cleaning element 3 is F1, an equivalent force on the proximal elastic members 505A is F2, and an equivalent force on the distal elastic members 505B is F3. The force F1 applied on the cleaning element 3 is parallel to the longitudinal axis L1 of the cleaning element, that is, perpendicular to the median plane P. Referring to FIG. 17, in the fourth embodiment, the angles between the planes of the elastic members 505A and 505B and the longitudinal axis L1 of the cleaning element are an angle δ, and the angle δ is less than 80 degrees. In this embodiment, the angle δ is 60 degrees. When the force F1 is applied on the cleaning element 3, the elastic members 505A and 505B can generate component forces parallel to the longitudinal axis L1 of the cleaning element. Since edges 509 of the elastic members 505A and 505B are fixedly coupled to the transducer frame portion 512 enclosing the driving shaft, and the other edges 508 are fixedly coupled to the frame protrusions 511, according to the principles of force moment balance and force balance, the direction of the equivalent force F2 on the proximal elastic members 505A is opposite to the direction of the force F1, the direction of the equivalent force F3 on the distal elastic members 505B is the same as the direction of the force F1, the proximal elastic members 505A are in a stretched state to generate the equivalent force F2, and the distal elastic members 505B are in a stretched state to generate the equivalent force F3. The component forces of the force F1 in the direction perpendicular to the planes of the elastic members cause force bending deformation of the elastic members 505A and 505B. This force bending deformation will additionally increase the internal stress of the elastic members, which may cause the elastic members to yield, thereby causing a drastic change in the natural frequency of the transducer 510, consequently causing a failure of the transducer. In order to avoid a failure of the transducer, in the present invention, the angle δ is less than 80 degrees and greater than or equal to 0 degrees. More preferably, the angle δ is less than or equal to 60 degrees and greater than or equal to 0 degrees, so that the component forces of the force F1 in the direction perpendicular to the planes of the third elastic members are effectively reduced, thereby reducing the force bending deformation of the third elastic members caused by the force F1.

Equally importantly, a distance between the equivalent force F2 on the proximal elastic members 505A and the equivalent force F3 on the distal elastic members 505B is particularly important for the force moment balance. Through a large number of experiments and based on the feasibility of the production process, along the direction of the longitudinal axis L2 of the driving shaft, a distance between a center line L5 of the proximal elastic member and a center line L6 of the distal elastic member is 3.5 mm or more, and the center line refers to a second elastic member plane center line that is located on the plane of the elastic member and points from the frame fastening arm 513 to the transducer frame portion 512 enclosing the driving shaft. As shown in FIG. 14, since the distance between the center line L5 of at least one third proximal elastic member and the center line L6 of the third distal elastic member is 3.5 mm or more, it is more possible to avoid torsional deformation of the elastic members 505A and 505B caused by the force F1 on the cleaning element 3 compared to the case where only one proximal elastic member 505A is provided, so as to avoid an excessive stress of the elastic member, thereby avoiding a failure of the transducer.

As a variation of the fourth embodiment of the present invention, there may alternatively be only two elastic members 505. The two elastic members 505 include one proximal elastic member 505A and one distal elastic member 505B, for example, only one proximal elastic member 505A located on the left side of the driving shaft in FIG. 15 and only one elastic member 505B located on the right side of the driving shaft in FIG. 15. This can still meet the requirements of the present invention for the combination of elastic members.

The distribution and positions of the magnets are similar to the analysis in FIGS. 10, 11, 12 and 13, and will not be described again here. All the above combinations fall within the scope of the present invention.

Obviously, similar to the first embodiment, the metal proximal elastic members 505A and distal elastic members 505B in the fourth embodiment can also identify the force F1 on the cleaning element. For the force F1 on the cleaning element, the maximum force $F1_M$ of the cleaning element ranges from 3 N to 15 N, and the start-up force F4 of the cleaning element is greater than or equal to 0 N and less than or equal to 2.5 N.

The transducer device according to the present invention introduces elastic members arranged in a staggered manner along the driving shaft to balance the force and force moment caused by the force F1 on the cleaning element, and reduces additional bending deformation of the elastic members caused by the force F1 on the cleaning element 3, thereby making the transducer work in the harmonic vibration state for a long life. Moreover, it is ensured that the transducer and the cleaning assembly are within the harmonic vibration range, and the force that can be applied on the cleaning element can be greater. In addition, the use of the arrangement of the elastic members according to the present invention can realize miniaturization of the cleaning apparatus.

The energy transfer efficiency in the harmonic vibration state or resonant state is very high. In the existing driving structure using bearings (such as ball bearings), constraint members such as bearings are provided to prevent the cleaning apparatus from movement other than rotational motion. However, this constraint will bring about noise and energy loss, and also increased costs. According to the present invention, due to rational configuration of the elastic members and the permanent magnets, the transducer can rotate smoothly, thereby eliminating some constraint members that must be provided for realizing the rotational motion of the cleaning appliance. Due to the rational configuration of the permanent magnets, the resulting electromagnetic force on the transducer 7 and the transducer is approximately zero. In addition, the torque acting on the transducer 7 and the transducer is skillfully utilized, so that the constraint structure can be omitted, thus making the cleaning appliance have a more compact structure, rotate more smoothly, and have less noise.

The present invention has been disclosed above in terms of the preferred embodiments which, however, are not intended to limit the present invention, and any person skilled in the art could make possible changes and alterations without departing from the spirit and scope of the present invention. Hence, any alterations, equivalent changes and modifications which are made to the above-mentioned embodiments in accordance with the technical substance of the present invention and without departing from the content of the technical solutions of the present invention, will fall within the scope of protection defined by the claims of the present invention.

**Claims**

1. A transducer device for a personal clean-and-care appliance, comprising:

   a transducer (7, 7') including a transducer frame(110, 510), magnets attached to said transducer frame, an elastic assembly attached to said transducer frame, and a driving shaft(101, 501), wherein said driving shaft has a proximal end and a distal end, and said driving shaft is fixedly attached to said transducer frame, wherein said driving shaft defines a longitudinal axis (L2) which extends through a median plane (P), and said median plane is substantially perpendicular to a cleaning action force (F1) applied on said clean-and-care appliance; and
   driving coils (121, 122, 221, 321, 322, 323, 324) arranged opposite to said magnets of said transducer (7, 7'), and said transducer is movable relative to said driving coils,
   wherein said elastic assembly includes at least one proximal elastic member (105A, 505A) and at least one distal elastic member (105B, 505B) which are arranged offset along said longitudinal axis (L2), and said proximal elastic member is closer to said proximal end of said driving shaft than said distal elastic member,
   wherein said proximal elastic member (105A, 505A) and said distal elastic member (105B, 505B) each have a first edge (109, 509) and a second edge(108, 508), said first edges (109, 509) are fixedly coupled to said driving shaft to move with said driving shaft, said second edges (108, 508) form fixed edges when said proximal elastic member and said distal elastic member are elastically deformed, and respective planes of said proximal elastic member (105A, 505A) and said distal elastic member(105B, 505B) substantially extend radially outward from said longitudinal axis.

2. The transducer device according to claim 1, wherein a distance between center lines of respective widths of said proximal elastic member and said distal elastic member along said longitudinal axis is at least 3.5 mm.

3. The transducer device according to claim 1, wherein said plane of said proximal elastic member forms a first angle relative to said median plane (P), and said plane of said distal elastic member forms a second angle relative to said median plane, wherein said first angle and said second angle are greater than or equal to 10 degrees and less than or equal to 90 degrees.

4. The transducer device according to any one of claims 1-3, wherein said proximal elastic member and said distal elastic member are located on two opposite sides of said median plane or on same side of said median plane, and said proximal elastic member and said distal elastic member are located on two opposite sides or the same side of a perpendicular plane that is perpendicular to said median plane (P) and includes said longitudinal axis, or said proximal elastic member and said distal elastic member are disposed along a direction of said perpendicular plane.

5. The transducer device according to claim 1 or 2, wherein said proximal elastic member is made of plastic or metal, and said distal elastic member is made of plastic or mainly made of plastic.

6. The transducer device according to any one of claims 1-3, wherein said proximal elastic members are arranged in a pair symmetrically about the longitudinal axis, and said distal elastic members are arranged in a pair symmetrically about the longitudinal axis.

7. The transducer device according to claim 1, wherein said elastic assembly further includes at least another elastic member (104A, 104B) made of metal, which is arranged offset relative to said proximal elastic member and said distal elastic member along the longitudinal axis, and an angle between a plane of said metal elastic member and the median plane is less than the angles between said planes of said proximal elastic member and said distal elastic member and said median plane;
an elastic modulus of said another elastic member is twenty or more times greater than an elastic modulus of said distal elastic member.

8. The transducer device according to claim 1, wherein said transducer frame includes a transducer frame portion (112) enclosing said driving shaft and a pair of frame fastening arms (113) spaced radially from said driving shaft,

wherein said frame fastening arm (113) has an upper protrusion and a lower protrusion, said upper protrusion and said lower protrusion are arranged offset from each other on said frame fastening arm,
said first edges are fixed to the transducer frame portion, and said second edges are respectively fixed to said upper protrusion and said lower protrusion of the frame fastening arm.

9. The transducer device according to claim 1, wherein

said driving coils are arranged to have no relative movement relative to the housing of the clean-and-care appliance, and said driving coils are arranged in a magnetic field generated by said magnets, an angle between magnetic lines generated by said magnets (102, 103, 202, 203, 302) and the direction of current I in the driving coils (121, 122) is approximately 90 degrees, wherein the alternating current I with a frequency of $f_0$ passes through said driving coils, so that said driving coils interact with said magnets to generate a reciprocating force couple with the longitudinal axis (L2) of the driving shaft as an axis, and said reciprocating force couple drives the transducer to perform harmonic vibration.

10. A pressure alarm mechanism for a clean-and-care appliance, comprising:

a driving shaft (101) defining a longitudinal axis and having a proximal end and a distal end, a driving portion being attached to said driving shaft from said distal end of said driving shaft, and the proximal end generating a first displacement in a first direction when a cleaning action force (F1) of the clean-and-care appliance is in the first direction;
a proximal elastic member (105A, 505A), a first edge (109) of said proximal elastic member being fixedly coupled to said driving shaft to move with said driving shaft, and a supporting point for said driving shaft being formed at the position of said proximal elastic member;
a distal elastic member (105B, 505B) disposed offset toward the distal end along the longitudinal axis relative to said proximal elastic member, a first edge (109) of said distal elastic member being fixedly coupled to said driving shaft to move with said driving shaft, and said driving shaft at the position of said first edge of said distal elastic member generating a second displacement in a second direction opposite to said first direction when said cleaning action force (F1) is applied to the proximal end;
a sensing device including a fixed component and a movable component, where said movable device is disposed on the driving portion, and when the cleaning action force (F1) is applied to said proximal end, said movable component generates a third displacement in the second direction relative to the fixed component, and when said cleaning action force F1 exceeds a maximum force ($F1_M$), said displacement of the movable component relative to said fixed component causes an alarm device of said pressure alarm mechanism to generate an alarm indication.

11. The pressure alarm mechanism according to claim 10, wherein said proximal elastic member (105A, 505A) and said distal elastic member (105B, 505B) each have a second edge (108, 508) opposite to said first edge, and said second edges (108, 508) form fixed edges when said proximal elastic member and said distal elastic member are elastically deformed, wherein a distance between center lines of the respective widths of said proximal elastic member and said distal elastic member along the longitudinal axis is at least 3.5 mm.

12. The pressure alarm mechanism according to claim 10 or 11, wherein said longitudinal axis extends through a median plane, and the median plane is substantially perpendicular to the cleaning force, a plane of said proximal elastic member forms a first angle relative to said median plane (P), and a plane of said distal elastic member forms a second angle relative to said median plane, wherein said first angle and said second angle are greater than or equal to 10 degrees and less than or equal to 90 degrees, wherein said proximal elastic member and said distal elastic member are located on two opposite sides of said median plane or on the same side of said median plane, and said proximal elastic member and said distal elastic member are located on two opposite sides or on the same side of a perpendicular plane that is perpendicular to said median plane (P) and including the longitudinal axis, or said proximal elastic member and said distal elastic member disposed along a direction of the perpendicular plane.

13. The pressure alarm mechanism according to claim 10, wherein said driving portion includes a magnet and a frame, said magnet are attached to said distal end of said driving shaft via said frame, said movable component is farther away from said proximal elastic member than said proximal end of said driving shaft.

14. The pressure alarm mechanism according to claim 10, wherein a fixed component of said sensing device includes a sensing apparatus and an emission source, a gap is formed between said sensing apparatus and said emission source, and said movable component includes a stop that can move into said gap between said sensing apparatus and said emission source, wherein said sensing apparatus and said emission source include at least one of an electrical apparatus, a magnetic apparatus , and a optical sensing apparatus and an emission source.

15. The pressure alarm mechanism according to claim 14, wherein said sensing apparatus and said emission source are disposed on a circuit board or a housing of said clean-and-care appliance or on a part fixed relative to said housing.

16. The pressure alarm mechanism according to claim 10, wherein said pressure alarm mechanism includes a force limiting portion, which limits a movement range of said movable component, such that said maximum force ($F1_M$) is in a range of 2.5 N to 15 N, wherein the limiting portion for the maximum force is disposed on the housing of said clean-and-care appliance or a part relative to the housing.

17. The pressure alarm mechanism according to claim 16, wherein said pressure alarm mechanism comprises driving coils arranged to have no relative movement relative to the housing of the clean-and-care appliance, the driving coils are arranged in a magnetic field generated by the magnets, an angle between magnetic lines generated by the magnets (102, 103, 202, 203, 302) and the direction of current I in the driving coils (121, 122) is approximately 90 degrees, wherein the alternating current I with a frequency of $f_0$ pass through said driving coils, so that the driving coils interact with the magnets to generate a reciprocating force couple with the longitudinal axis (L2) of said driving shaft as an axis, and said reciprocating force couple drives the transducer including said driving shaft, said proximal elastic member and said distal elastic member to perform harmonic vibration.

18. A clean-and-care appliance comprising the transducer device according to any one of claims 1-9 or the pressure alarm mechanism according to any one of claims 10-17, the clean-and-care appliance comprises one of an electric toothbrush, an electric shaver, an electric facial cleaner and an electric shower.

19. The clean-and-care appliance according to claim 18, wherein said transducer (7) and a cleaning assembly of said clean-and-care appliance form a harmonic vibration body, said driving coils and the magnets interact to generate a reciprocating force couple with the longitudinal axis (L2) of the driving shaft as an axis, said reciprocating force couple drives the harmonic vibration body to perform harmonic vibration, and a natural frequency $f_n$ of the harmonic vibration body is between 85% and 115% of the frequency $f_0$ of the reciprocating force couple.

**Fig. 1**

**Fig. 2**

Fig. 3

Fig. 4

**Fig. 5**

**Fig. 6**

**Fig. 7**

**Fig. 8**

EP 4 366 145 A1

**Fig. 9**

**Fig. 10**

**Fig. 11**

**Fig. 12**

**Fig. 13**

EP 4 366 145 A1

Fig. 14

32

**Fig. 15**

**Fig. 16**

**Fig. 17**

# EP 4 366 145 A1

<table>
<tr><td colspan="2" align="center">INTERNATIONAL SEARCH REPORT</td><td>International application No.<br>**PCT/CN2022/101744**</td></tr>
</table>

**A. CLASSIFICATION OF SUBJECT MATTER**

H02K 33/02(2006.01)i; A61C 17/26(2006.01)i; G01L 1/26(2006.01)i

According to International Patent Classification (IPC) or to both national classification and IPC

**B. FIELDS SEARCHED**

Minimum documentation searched (classification system followed by classification symbols)

H02K; A61C; G01L

Documentation searched other than minimum documentation to the extent that such documents are included in the fields searched

Electronic data base consulted during the international search (name of data base and, where practicable, search terms used)

IEEE, CNKI, CNTXT, ENTXT, ENTXTC, DWPI, WPABS: 清洁, 护理, 口腔, 牙刷, 剃须刀, 洁面器, 电动, 轴, 弹片, 弹簧, 弹性件, 形变, 变形, 柔性, 近端, 远端, 上, 下, 不对称, 驱动, 电机, 马达, 磁体, 磁铁, 永磁, 线圈, 绕组, 压力, 报警, 传感器, cleaning, oral, care, toothbrush, shavers, cleanser, electric, shaft, spring, elastic, deformation, flexible, proximal, distal, up, down, asymmetric, drive, motor, magnet, permanent coil, winding, pressure, alarm, sensor

**C. DOCUMENTS CONSIDERED TO BE RELEVANT**

| Category* | Citation of document, with indication, where appropriate, of the relevant passages | Relevant to claim No. |
|---|---|---|
| PX | CN 216162590 U (SHANGHAI SHIFT ELECTRICS CO., LTD.) 01 April 2022 (2022-04-01)<br>description, paragraphs 109-184, and figures 1-17 | 1-10, 18, 19 |
| A | CN 112006800 A (SHANGHAI SHIFT ELECTRICS CO., LTD.) 01 December 2020 (2020-12-01)<br>description, paragraphs 95-111, and figures 1-16 | 1-19 |
| A | CN 106901857 A (JIANGSU KOONA INTELLIGENT EQUIPMENT CO., LTD.) 30 June 2017 (2017-06-30)<br>entire document | 1-19 |
| A | CN 109067131 A (ZHONGKE (SHENZHEN) INNOVATION CREATIVE TECHNOLOGY CO., LTD.) 21 December 2018 (2018-12-21)<br>entire document | 1-19 |
| A | EP 3451512 A1 (HU JIANKUN) 06 March 2019 (2019-03-06)<br>entire document | 1-19 |
| A | US 2016000543 A1 (PANASONIC CORP.) 07 January 2016 (2016-01-07)<br>entire document | 1-19 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 August 2022** | **01 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/101744** |

**C.    DOCUMENTS CONSIDERED TO BE RELEVANT**

| Category* | Citation of document, with indication, where appropriate, of the relevant passages | Relevant to claim No. |
|---|---|---|
| A | 清水宏明等 (SHIMIZU, H, et al.). "声波振动式牙刷用双向振动驱动器 (Bi-Directional Oscillating Actuator for Sonic Toothbrushes)" 家电科技 (China Appliance Technology), No. 06, 12 June 2005 (2005-06-12), ISSN: 1672-0172,          pp. 41-44 | 1-19 |

Form PCT/ISA/210 (second sheet) (January 2015)

| International application No. |
|---|
| **PCT/CN2022/101744** |

| Patent document cited in search report | | | Publication date (day/month/year) | Patent family member(s) | | | Publication date (day/month/year) |
|---|---|---|---|---|---|---|---|
| CN | 216162590 | U | 01 April 2022 | None | | | |
| CN | 112006800 | A | 01 December 2020 | CN | 211067129 | U | 24 July 2020 |
| | | | | WO | 2020238421 | A1 | 03 December 2020 |
| | | | | EP | 3960124 | A1 | 02 March 2022 |
| | | | | CA | 3139628 | A1 | 03 December 2020 |
| CN | 106901857 | A | 30 June 2017 | CN | 106901857 | B | 05 February 2019 |
| CN | 109067131 | A | 21 December 2018 | None | | | |
| EP | 3451512 | A1 | 06 March 2019 | US | 2019140533 | A1 | 09 May 2019 |
| | | | | WO | 2017185230 | A1 | 02 November 2017 |
| | | | | EP | 3451512 | A4 | 22 May 2019 |
| | | | | EP | 3451512 | B1 | 12 February 2020 |
| | | | | US | 10778076 | B2 | 15 September 2020 |
| US | 2016000543 | A1 | 07 January 2016 | WO | 2014103226 | A1 | 03 July 2014 |
| | | | | JP | 2014128186 | A | 07 July 2014 |
| | | | | EP | 2940843 | A1 | 04 November 2015 |
| | | | | EP | 2940843 | A4 | 27 April 2016 |
| | | | | JP | 5995083 | B2 | 21 September 2016 |
| | | | | EP | 2940843 | B1 | 19 September 2018 |
| | | | | US | 9895210 | B2 | 20 February 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104617732 B